# EUROPÄISCHE PATENTSCHRIFT

(11) **EP 4 450 545 B1**
(45) Veröffentlichungstag und Bekanntmachung des Hinweises auf die Patenterteilung: **26.08.2026**
(21) Anmeldenummer: 23168654.4
(22) Anmeldetag: 19.04.2023
(51) Int. Cl.: C08J 9/12, B29C 44/44, C08G 64/00, C08J 9/16, C08G 64/42, C08J 9/232

(54) **VERFAHREN ZUR HERSTELLUNG VON NACHEXPANDIERBAREN POLYCARBONAT-BEADS UND ENTSPRECHENDE POLYCARBONAT-BEADS**
METHOD FOR PRODUCING POST-EXPANDABLE POLYCARBONATE BEADS AND CORRESPONDING POLYCARBONATE BEADS
PROCÉDÉ DE PRÉPARATION DE BILLES DE POLYCARBONATE POST-EXPANSIBLES ET BILLES DE POLYCARBONATE CORRESPONDANTES

(43) Veröffentlichungstag der Anmeldung: 23.10.2024
(73) Patentinhaber: Covestro Deutschland AG, 51373 Leverkusen (DE)
(72) Erfinder: NOLTE, Marius, 51373 Leverkusen (DE); KLEIN, Andreas, 51373 Leverkusen (DE); BRONOVA, Anna, 51373 Leverkusen (DE); MANNEL, Birgit, 47829 Krefeld (DE); RAPS, Daniel, 51373 Leverkusen (DE); DIJKSTRA, Dirk, 51373 Leverkusen (DE); ALTSTÄDT, Volker, 95444 Bayreuth (DE); WEINGART, Nick, 51373 Leverkusen (DE)
(74) Vertreter: Levpat

(56) Entgegenhaltungen:
- EP-A1- 3 858 906
- WO-A1-2012/020112

## Beschreibung

Die Erfindung betrifft nachexpandierbare Polycarbonat-Beads (einen Partikelschaum), einen Herstellungsprozess für diese Polycarbonat-Beads sowie aus den Polycarbonat-Beads erhältliche Formteile und ein entsprechendes Herstellungsverfahren.

Partikelschäume, und hier insbesondere EPS, EPP und E-TPU, erlangen zunehmend an Bedeutung. Die heutige Technologie erlaubt es mittlerweile, Partikelschäume verlässlicher Qualität und aus diesen Partikelschäumen Bauteile mit vorteilhaften Eigenschaften herzustellen. Durch die geringere Schüttdichte gegenüber den "einfachen" Thermoplasten erschließen sich für die expandierten Materialien neue Anwendungsfelder bzw. herkömmliche Anwendungen lassen sich mit deutlichen Gewichtseinsparungen realisieren. Expandierte Thermoplasten sind somit insbesondere für Leichtbauanwendungen ein attraktives Material, sofern auch anwendungsspezifischen Eigenschaften hinreichend gut sind. Werkzeugentwicklungen in den letzten Jahren erlauben es, auch solche Bauteile herzustellen, deren Oberflächen eine solche Optik aufweisen, dass selbst Sichtteile aus expandierten Thermoplasten eine echte Alternative zu entsprechenden Spritzgussformteilen sind, während sie ein deutlich geringeres Gewicht aufweisen. Aufgrund des geringeren Materialverbrauchs sind die expandierten Materialien auch unter Nachhaltigkeitsgesichtspunkten attraktiv und können zudem aufgrund im Allgemeinen guter Wärmeisolationseigenschaften auch zu Energieeinsparungen beitragen, etwa bei der Verwendung als Wärmedämmmaterial oder als zusätzlichen Effekt bei der Verwendung als Dämmstoff zur Geräuschunterdrückung.

Auch Partikelschäume aus Polycarbonat wurden bereits beschrieben. Partikelschäume aus technischen Thermoplasten sind beispielsweise für die Automobilindustrie wegen Eigenschaften wie einer hohen Temperaturbeständigkeit und guten Brandverhaltens von Interesse. EPC ist ein Partikelschaum für Hochtemperaturanwendungen, bei denen herkömmliche Polymerschäume wie EPP versagen. DE 4100200 A1 beschreibt ein Verfahren zur Herstellung von Polycarbonatschaum aus Polycarbonat, bei welchem dem aromatischen Polycarbonat ein Umesterungskatalysator in Kombination mit aromatischen Polycarbonsäuren oder Wasser, ggf. zusammen mit aliphatischen Hydroxycarbonsäuren und/oder aliphatischen Alkoholen, zugesetzt wird. Es kommt dabei zu einem kontrollierten, partiellen Abbau des Polycarbonats unter Freisetzung von CO₂, was zum Verschäumen des restlichen Polycarbonats dient. Die in dem Dokument beschriebenen Polycarbonatschäume weisen Dichten um die 0,4 bis 0,8 g/cm³ auf.

Die EP 3858906 A1 offenbart ein Verfahren zur Herstellung expandierter Partikel aus aromatischem Polycarbonat durch Extrudieren von aromatischem Polycarbonat, Granulieren, Imprägnieren mit Kohlendioxid als Treibmittel und Expandieren der Partikel, gefolgt von der Formgebung der Partikel, um einen expandierten Formkörper zu erhalten.

EP 2603549 A1 beschreibt Polyesterschäume und rechnet diesen auch explizit Polycarbonatschäume zu, die neben einer geringen Dichte eine gute Verarbeitbarkeit aufweisen. Zur Herstellung dieser Partikelschäume wird ein Ausgangspolymermaterial gewählt, bei dem Kristallinität, widergespiegelt durch die Schmelzenthalpie, Glasübergangstemperatur und Schmelztemperatur in einem bestimmten Bereich liegen. Das Verfahren zur Herstellung der Partikelschäume umfasst das Bereitstellen entsprechender Ausgangspolymerkomponenten in geschmolzenem Zustand, das Einmischen einer Treibmittelkomponente und ggf. von einem oder mehreren Additiven in die Schmelze, die Extrusion und das Granulieren der treibmittelhaltigen Schmelze unter Wasser unter erhöhtem Druck von 1 bis 20 bar. EP 2603549 A1 beschreibt auch die grundsätzliche Möglichkeit, zur Stabilisierung des Extrusionsvorganges durch Erhöhung des Molekulargewichts beispielsweise Kettenverlängerer zuzugeben, wobei keine konkrete Mengenangabe erfolgt. Auch werden dort keine weiteren Anforderungen an das eingesetzte Polymer gestellt.

Die Verarbeitung von Partikelschäumen, auch Polycarbonat-Beads, zu Formteilen kann über mehrere Verfahren, z.B. variotherm (thermisch durch Heizen) oder im etablierten Wasserheißdampf-Prozess, hier bevorzugt im Wasserheißdampf-Prozess, erfolgen. Beim Wasserheißdampf-Prozess wird im Wasserdampf-Formteilautomat die Partikeloberfläche unter Verwendung von Wasserdampf unter Druck, d.h. unter Erreichen hoher Temperaturen im Heißdampf durch hohen Druck, angeschmolzen oder erweicht, was zu einer Interdiffusion von Polymerketten zwischen verschiedenen Beads und resultierender Kohäsion der Beads führt. Für eine hohe Verschweißqualität zwischen den Polycarbonat-Beads sind für EPC bis jetzt Dampfdrücke von 7 bis 11 bar (165,0 - 184,1 °C), besonders bevorzugt 8 bis 10 bar (170,4 - 179,9 °C) notwendig. Eine gute Kohäsion zwischen den Partikeln und ein geringer Anteil an Makroporen/Zwickel, d.h. Hohlräumen zwischen Partikeln im Bauteil aufgrund schlechter Packung, sind notwendig für günstige mechanische Eigenschaften der resultierenden Formteile. Die homogene Formteilherstellung wird durch eine Überfüllung des Werkzeuges sichergestellt und ist auf simple Geometrien beschränkt. Eine Formung von komplexen 3D-Bauteilen aus Polycarbonat-Beads ist damit bis jetzt nicht möglich.

Die bereits in der Praxis für EPP (expandiertes Polypropylen) oder EPS (expandiertes Polystyrol) eingesetzten Formteilautomaten lassen sich in drei Arbeitsbereiche einteilen: "Low-pressure" bis 2 bar, "Midpressure" 3 - 10 bar und "High-pressure" 11 - 20 bar. Die "Low-pressure" Formteilautomaten realisieren bei max. 2 bar Dampfdruck eine Temperatur von 120 °C und eignen sich nur zur Verschweißung von EPS. Bei Wasserdampf-Formteilautomaten korrelieren zum einen der Energieaufwand und damit auch die Betriebskosten mit dem Arbeitsdruckbereich, zum anderen gibt der Dampfdruck die Temperatur des Dampfes und somit die Verarbeitbarkeit des Polymers vor, sodass die Verschweiß-Dienstleister und ihre Formteilautomaten auf die Verarbeitung von EPP im Druckbereich von 3 - 6 bar, meistens 3 - 4 bar, spezialisiert sind.

Aufgabe war es, nun auch Polycarbonat-Beads bereitzustellen, die mittels Wasserheißdampf bei mittleren Dampfdrücken im Bereich von 4 - 6 bar zu Formteilen guter Qualität verarbeitet werden können, insbesondere auch zu solchen Formteilen mit einer komplexen 3D-Formteil-Geometrie. Die Dampfdruckbestimmung im Werkzeug erfolgt bevorzugt durch Drucksensoren nach DIN 16086:2006-01.

Überraschend wurde nun gefunden, dass Formteile, insbesondere auch 3D-Formteile, aus "Polycarbonat-Beads" (Polycarbonat-Partikelschäumen) bei mittleren Dampfdrücken von 4 bis 6 bar, insbesondere bei 4 bar (= absoluter Druck des Wasserdampfes), nur zugänglich sind, wenn ein optimales Verhältnis zwischen dem Molekulargewicht des in den Polycarbonat-Beads enthaltenen aromatischen Polycarbonats und einer verzweigten Polymertopologie durch die Temperatur und Verweilzeit-abhängige Reaktion mit einem Kettenverlängerer eingestellt wird und die Beads im entropischen nicht-Gleichgewichtszustand eingefroren werden, was durch "Abschrecken", ein abruptes Abkühlen, erfolgt. Es wird vermutet, dass die Polymerketten in den Beads, wie sie durch das erfindungsgemäße Verfahren erhalten werden, durch Scherung und Temperatur ausgerichtete, orientierte Polymerketten aufweisen, die in diesem Zustand eingefroren sind. Wenn wieder eine Energiezuführung, hier durch Heißdampf, erfolgt, kehren die Polymerketten zum entropisch günstigeren Zustand des Polymerknäuels mit zufälliger Orientierung der Ketten zurück.

Erst durch die reaktive Partikel-Schaumextrusion bei hohen Schmelzetemperaturen T von T₁ = (T_{g} + 110°C) bis T₂ = (T_{g} + 170 °C) mit T_{g} = der Glasübergangstemperatur des aromatischem Polycarbonats, ermöglicht durch den Kettenverlängerer, und mutmaßlich durch eine Immobilisierung der verzweigten Polymertopologie an der Partikeloberfläche in einem gescherten, orientierten, entropischen Nicht-gleichgewichtszustand kann die Nachexpansion bewirkt werden. Die Nachexpansion der Partikel beim Verschweißen mittels Heißdampf wird durch Relaxation der entropisch-ungünstig immobilisierten Verzweigungen/Vernetzungen an der Partikel-Oberfläche der Polycarbonat-Beads ohne weitere Nachbehandlung, insbesondere auch ohne nachträgliche Gasbeladung ermöglicht. Unter einer "Partikel-Schaumextrusion" nach dem bisherigen Stand der Technik versteht der Fachmann einen vollständigen oder teilweisen Extrusionsprozess unter Zusatz von einem Treibgas mit abschließender Granulierung und Abkühlung zu expandierten Partikeln, im Falle von amorphen Thermoplasten bei Schmelzetemperaturen an der Düse von T_{g} + 10 °C bis T_{g} + 70 °C mit T_{g} = der Glasübergangstemperatur des Polymermaterials. Hierbei hat sich herausgestellt, dass sowohl der Gehalt an OH-Endgruppen des eingesetzten aromatischen Polycarbonats als auch das Mengenverhältnis aus den OH-Endgruppen und den reaktiven Gruppen des Ketternverlängerers, aber auch die Verweilzeit der reaktiven Mischung aus aromatischem Polycarbonat und Kettenverlängerer im Schmelzezustand eine wesentliche Rolle spielen.

### Gegenstand der Erfindung ist daher ein

Verfahren zur Herstellung von nachexpandierbaren geschäumten Polycarbonat-Beads mittels
a) kontinuierlicher Partikelschaumextrusion einer plastifizierten Mischung in einem Extrusionsprozess, wobei die Mischung die folgenden Komponenten enthält:
   i) aromatisches Polycarbonat, wobei das aromatische Polycarbonat, bezogen auf das Gesamtgewicht des aromatischen Polycarbonats, einen Gehalt an OH-Endgruppen von mindestens 350 ppm, bestimmt mittels ¹H-NMR-Spektroskopie mit Dichlormethan als Lösungsmittel bei Raumtemperatur, aufweist, und
   ii) einen für OH-Gruppen geeigneten Kettenverlängerer,
      wobei das aromatische Polycarbonat und der für OH-Gruppen geeignete Kettenverlängerer in einem solchen molaren Verhältnis eingesetzt sind, dass auf 1 mol OH-Endgruppen des Polycarbonats 0,64-1,10 mol der reaktiven Gruppe des Kettenverlängerers eingesetzt werden,
      sowie
   iii) ein physikalisches Treibmittel,
      bei einer Temperatur T der plastifizierten Mischung von T₁ = (T_{g} + 110°C) bis T₂ = (T_{g} + 170°C), wobei T_{g} die Glasübergangstemperatur des aromatischen Polycarbonats ist,
      wobei die Verweilzeit des aromatischen Polycarbonats und des für OH-Gruppen geeigneten Kettenverlängerers im Schmelzezustand mindestens 4 Minuten beträgt, und
   b) nachfolgender Unter-Wasser-Granulierung der Treibmittel-haltigen Schmelze bei Wassertemperaturen T₃ = (T_{g} - 90°C) bis T₄ = (T_{g} - 55°C) wobei T_{g} die Glasübergangstemperatur des aromatischen Polycarbonats ist, ohne Druckbeaufschlagung oder unter Druckbeaufschlagung des Wassers bis 3,5 bar.

Durch die abschließende Granulierung werden geschäumte Polycarbonat-Beads erhalten, welche, nachdem Gelegenheit zum Gasaustausch war, treibmittelfrei sind. Als finales Produkt des vorbeschriebenen Verfahrens erhält man somit treibmittelfreie, geschäumte Polycarbonat-Beads. Der Verlust des im Moment der Granulierung noch enthaltenen, verbliebenen Treibmittels erfolgt ohne weiteres Zutun bereits bei einfacher Lagerung der Beads nach dem Prozess, wobei üblicherweise weniger als eine Stunde ausreichend ist, damit die Beads schließlich treibmittelfrei sind, es also zu einem vollständigen Gasaustausch gekommen ist. Es ist aber ebenso möglich, die Beads kontrolliert unter erhöhte Temperatur zu bringen, um das Treibmittel noch rascher zu entfernen. Auch eine Lagerung über mehrere Tage bei einer hohen Temperatur von 120°C wirkt sich nicht negativ auf die spätere Nachexpandierbarkeit beim Heißdampfdiffusionsschweißen aus.

Der Gehalt an OH-Endgruppen wird mittels ¹H-NMR-Spektroskopie mit Dichlormethan als Lösungsmittel bei Raumtemperatur unter Auswertung des Verhältnisses der Integrale der Signale bei 6,68 ppm (zwei aromatische Protonen ortho-ständig zu phenolischen OH-Gruppen) und bei 1,68 ppm (sechs Methylprotonen der Bisphenol-A Einheit) ermittelt.

Die Glasübergangstemperatur wird bestimmt nach DIN EN ISO 11357-1:2017.

"Plastifizierte Mischung" bedeutet, dass eine Polymerschmelze vorliegt, deren Bestandteile homogen verteilt sind. Die Polymerschmelze kann z.B. direkt als frisch polymerisiertes Material dem Polymerisationsreaktor entnommen oder von diesem direkt in einen Mischextruder, in dem letztlich Kettenverlängerer, Treibmittel und ggf. Additive an verschiedenen Stellen geführt werden, geleitet werden. Der genannte Temperaturbereich für die plastifizierte Mischung meint den Temperaturbereich, in dem die Schmelze ab Plastifizierung bis zum Austritt an der Düse vorliegt. Es versteht sich, dass es im Rahmen der Erfindung liegt, wenn beispielsweise in Eingangszonen des Extruders eine geringere Temperatur vorliegt. Ebenso weicht es nicht vom allgemeinen Erfindungsgedanken ab, wenn irgendwo im Extruder auch eine oder mehrere Zonen höherer Temperatur vorhanden sind, solange die Temperatur der letzten Zonen bei der Partikel-schaumextrusion im genannten Bereich liegt. Bevorzugt aber findet eine Partikelschaumextrusion nur in Zonen im vorgegebenen Temperaturbereich statt.

Soweit nicht ausdrücklich anders beschrieben, sind alle ppm-Mengen in der vorliegenden Erfindung als Gewichtsanteile zu verstehen.

"Bis" und "bis zu" bedeutet erfindungsgemäß, dass der genannte Bereich den jeweiligen Grenzwert einschließt.

Sowohl für die Menge der OH-Endgruppen als auch für die Konzentration an Kettenverlängerer gibt es einen Mindestwert, aber auch eine Höchstkonzentration für eine Schaumextrusion bei hohen Schmelzetemperaturen T im Extruder und an der Düse (= formgebende Auslassöffnung) von T₁ = (T_{g} + 110 °C) bis T₂ = (T_{g} + 170 °C), bevorzugt T von T₁ = (T_{g} + 120 °C) bis T₂ = (T_{g} + 160 °C), besonders bevorzugt im Bereich von T₁ = (T_{g} + 130 °C) bis T₂ = (T_{g} + 150 °C) zur Partikelschaumherstellung, um dabei Beads für Polycarbonatformteile mit guter Mechanik im Dichtebereich von 200 bis 350 kg/m³, bestimmt anhand Auftriebsprinzip nach DIN EN ISO 845:2009-10, zu erhalten.

Die Zahl an OH-Gruppen des aromatischen Polycarbonats hat einen wesentlichen Einfluss darauf, ob Beads mit einer geringen Dichte und guter Mechanik der resultierenden Formteile erhalten werden können. Zu viele OH-Gruppen im Polycarbonat bedeuten eine zu hohe Reaktivität des Polycarbonats, was letztlich zu Umlagerungsreaktionen der Polycarbonatkette, einem Molekulargewichtsabbau aufgrund des zu schnellen Verzweigungsaufbaus mit damit verbundener zu rascher Viskositätserhöhung (zu hoher Schereintrag) und zu Vergilbung führt. Zu wenig OH-Gruppen im Polycarbonat führen jedoch dazu, dass die Reaktion mit dem Kettenverlängerer nicht ausreichend ist oder gar nicht erst abläuft. Dieses bedeutet jedoch ebenfalls, dass kein guter Partikelschaum mit ausreichender Mechanik erhalten wird. Vielmehr weist der Partikelschaum dann eine Vielzahl defekter, kollabierter Zellen auf.

Der OH-Endgruppengehalt des im erfindungsgemäßen Verfahren eingesetzten aromatischen Polycarbonats beträgt erfindungsgemäß mindestens 350 ppm, bevorzugt 350 ppm bis 600 ppm, weiter bevorzugt 380 ppm bis 580 ppm, besonders bevorzugt 400 ppm bis 550 ppm, ganz besonders bevorzugt 450 bis 550 ppm, bezogen auf das Gesamtgewicht an eingesetztem aromatischem Polycarbonat. Bezugsgröße ist hierbei das reine aromatische Polycarbonat, nicht die auf aromatischem Polycarbonat basierende Zusammensetzung. Um einen solchen Endgruppengehalt zu erreichen, werden bevorzugt mehr als 70 Gew.-% SPC, bezogen auf das Gesamtgewicht des eingesetzten aromatischen Polycarbonats, eingesetzt, weiter bevorzugt mindestens 80 Gew.-% SPC, bezogen auf das Gesamtgewicht des eingesetzten aromatischen Polycarbonats, ganz besonders bevorzugt wird ausschließlich SPC als aromatisches Polycarbonat für die Herstellung der Polycarbonat-Beads eingesetzt.

Auch die Konzentration des Kettenverlängerers ist wesentlich. Zu viel Kettenverlängerer führt aufgrund resultierender zu hoher Viskositäten bedingt durch zu starken Molekulargewichtsaufbau des Polycarbonats zu einer Nicht-Verarbeitbarkeit des Materials. Zu wenig Kettenverlängerer bewirkt keinen signifikanten Molekulargewichtsaufbau und somit einen nur unzureichenden Druckaufbau (Viskosität von PC ohne/mit unzureichend CE bei 300 °C ist zu niedrig) und letztlich eine schlechtere Mechanik der finalen Formteile, wobei die Reaktion des Kettenverlängerers mit dem Polycarbonat eine Funktion von Zeit und Temperatur ist. Der Schaumextrusionsprozess bei Bisphenol-A basiertem Homopolycarbonat erfolgt beispielsweise bevorzugt bei einer Gehäusetemperatur von T_{Gehäuse} von T_{1Gehäuse} = T_{g} + 100 °C bis T_{2Gehäuse} = T_{g} + 150 °C und einer Schmelzetemperatur T von ca. T_{g} + (110 bis 170 °C) nach Treibmitteleinmischung und -lösung. Eine Partikelschaumherstellung ohne Kühlung resultiert in kollabierten Partikeln mit hoher Dichte. Je nach Prozessführung führen die Stabilisierung und das Erstarren der Schaumstruktur über Kühlung dazu, dass die Schaumexpansion zu schnell unterbunden ist. Die hohen Temperaturen im Prozess ermöglichen, das vollständige Schäumpotential der Rezeptur unter Kühlung auszunutzen, indem das zu schnelle Abkühlen/ Erstarren kompensiert wird. Bei diesen Temperaturprofilen beträgt aber der Druck an der Lochplatte ohne Kettenverlängerer 80 - 90 bar. Der Einsatz von Kettenverlängerern erhöht den Druck an der Lochplatte auf 140 - 180 bar, bevorzugt 150 - 160 bar. Ohne entsprechende Kettenverlängerung und damit ohne die zusätzliche Viskositätserhöhung ist die Partikelschaumherstellung bei diesen Prozessbedingungen (Temperaturen) nicht möglich.

Damit Polycarbonat-Beads mit guten Eigenschaften resultieren, hat es sich als erfindungswesentlich herausgestellt, dass ein molares Verhältnis (bei einem kontinuierlichen Verfahren erfolgt eine durchsatzbezogene Zudosierung) von 1 mol OH-Endgruppen des Polycarbonats zu 0,64 - 1,10 mol, bevorzugt 0,71 bis 1,0 mol, weiter bevorzugt bis 0,96 mol, noch weiter bevorzugt 0,8 bis 0,9 mol, insbesondere 0,82 bis 0,90 mol der reaktiven Gruppe des Kettenverlängerers eingesetzt wird.

Vorzugsweise, sofern der Gehalt des aromatischen Polycarbonats an OH-Endgruppen 400 bis 550 ppm, bestimmt mittels ¹H-NMR-Spektroskopie mit Dichlormethan als Lösungsmittel bei Raumtemperatur, beträgt, werden auf 1 mol OH-Endgruppen des Polycarbonats 0,71 bis 0,96 mol der reaktiven Gruppe des Kettenverlängerers eingesetzt.

Es versteht sich, dass die anspruchsgemäßen Vorgaben hinsichtlich des Verhältnisses der Stoffmengen an OH-Endgruppen des Polycarbonats und der reaktiven Gruppe des Kettenverlängerers der Verfahrensführung entsprechend einzustellen ist. Bei einem kontinuierlichen Verfahren erfolgt zweckmäßigerweise eine Durchsatz-bezogene Konzentrationseinstellung (Relation mol/h : mol/h).

Durch den Einsatz eines Kettenverlängerers kommt es zu einem Molmassenaufbau des Polycarbonats hin zu einem Bereich von 40.000 bis 230.000 g/mol, bevorzugt 50.000 bis 160.000 g/mol, womit ein zusätzlicher Druckaufbau an der Lochplatte von etwa 60 bis 100 bar bei den Temperaturen, in dem Polycarbonat in plastifiziertem Zustand vorliegt, verbunden ist. Als Kettenverlängerer sind grundsätzlich Amine, Carboxylverbindungen, Maleinsäureanhydrid-modifizierte Verbindungen, epoxyfunktionalisierte Verbindungen, Oxazoline, Carbodiimide und/oder funktionalisierte Polymere, etwa auf Acrylat- und/oder Styrolbasis, geeignet, die entsprechende funktionelle Gruppe aufweisen. Derartige Verbindungen können alleine oder im Gemisch eingesetzt werden. Solche Gruppen sind beispielsweise Aminfunktionen bei den Aminen, Carboxylfunktionen bei den Carboxyverbindungen, Anhydridfunktionen bei Maleinsäureanhydrid-modifizierten Verbindungen, Epoxyfunktionen bei epoxyfunktionalisierten Verbindungen oder auch sonstige Funktionen, die mit den OH-Endgruppen des Polycarbonats so reagieren können, dass ein Kettenaufbau erfolgt. Bevorzugt sind als Kettenverlängerer insbesondere epoxyfunktionalisierte Verbindungen, äußerst bevorzugt epoxyfunktionalisierte Styrol-Acryl basierte Polymere, welche z.B. von der BASF SE als Joncryl-Additive, z.B. Joncryl ADR 4368, ADR 4400, ADR 4468 angeboten werden. Die Menge / Einwaage an Kettenverlängerer muss dem aromatischen Polycarbonat angepasst werden, sodass auf 1 mol OH-Endgruppen des Polycarbonats 0,64 bis 1,10 mol, bevorzugt 0,71 bis 1,0 mol, weiter bevorzugt bis 0,96 mol, noch weiter bevorzugt 0,8 bis 0,9 mol, insbesondere 0,82 bis 0,90 mol der reaktiven Gruppe des Kettenverlängerers eingesetzt werden. Ausgehend beispielsweise von einem aromatischen Polycarbonat mit 350 - 600 ppm OH-Endgruppen, umgesetzt mit einem Kettenverlängerer mit einem Epoxy-Äquivalentgewicht von 310 g/mol, z.B. mit Joncryl ADR 4468, in Konzentrationen von 0,4 - 1,2 Gew.-%, bevorzugt 0,5 - 1,0 Gew.-%, besonders bevorzugt in Konzentrationen von 0,7 - 0,9 Gew.-%, wobei die Menge an Kettenverlängerer auf die resultierende Gesamtzusammensetzung (auf aromatischem Polycarbonat basierende Zusammensetzung, d.h. inkl. ggf. Blendpartner und ggf. Additive, plus Kettenverlängerer) bezogen wird, können die Bereiche der Reaktivgruppenverhältnisse erreicht werden. Durch gezieltes Einstellen des molaren Verhältnisses von 1 mol zu 0,64 bis 1,10 mol werden Molekulargewichtsbereiche von 50.000 bis 160.000 g/mol, bevorzugt bis 155.000 g/mol, bestimmt wie beschrieben, erzielt.

Das erfindungsgemäße Verfahren kann ein einstufiges, ein zweistufiges oder auch ein mehr als zweistufiges Extrusionsverfahren sein. Dabei kann die Aufbaureaktion mit einer ausreichenden Verweilzeit durch mehrere Extrusionsschritte realisiert werden. Die Verweilzeit bei mehreren Schritten umfasst die kumulative Zeitspanne, d.h. die gesamte Zeitspanne des Polymer-Kettenverlängerer-Gemisches im Schmelzezustand, in welchem eine Aufbaureaktion stattfinden kann, bis zum Austragen.

Sofern das Verfahren ein zweistufiges ist, erfolgt im ersten Extrusionsschritt der Molekulargewichtsaufbau des Polymers in Anwesenheit des Kettenverlängerers, wobei ein Polycarbonat-Granulat als erstes Produkt erhalten wird. Im zweiten Extrusionsschritt erfolgt das Aufschäumen mit dem physikalischen Treibmittel, vorzugsweise Kohlenstoffdioxid, wobei das Ergebnis der sich anschließenden Unterwassergranulation schließlich die erfindungsgemäßen Polycarbonat-Beads sind.

Erfindungsgemäß ist eine Mindestverweilzeit von 4 min vorgesehen. Eine Obergrenze ergibt sich je nach Anlagensetup durch die maximal verarbeitbare Viskosität. Die Aufbaureaktion, welche eine Funktion von Temperatur und Zeit ist, hat ein Maximum. Theoretisch kann die Mischung zum kompletten Abreagieren gebracht werden. Damit ist die Viskosität entsprechend hoch. An diesem Punkt kann es sein, dass Anlagen wegen einer zu hohen Viskosität stehenbleiben oder aber weiter arbeiten und dadurch die Polymerketten mechanisch wieder zerstören. Eine Verweilzeit bis 15 min, bevorzugt bis 420 s ist üblicherweise ohne Schwierigkeiten händelbar.

Die Extrusion der Schmelze an der Austrittsöffnung des Extruders durch eine Düsenplatte erfolgt nach Treibmitteleinmischung und -lösung in der Regel mit einer Temperatur der Schmelze T von T₁ = (T_{g} + 110 °C) bis T₂ = (T_{g} + 170 °C), bevorzugt von T₁ = (T_{g} + 120 °C) bis T₂ = (T_{g} + 160 °C), besonders bevorzugt im Bereich von T₁ = (T_{g} + 130 °C) bis T₂ = (T_{g} + 150 °C). Dabei wird die Temperatur der Düsenplatte zudem bevorzugt auf eine Temperatur von T_{g} + (130 bis 150 °C) eingestellt, um ein Einfrieren der Düse durch abkühlende Polymerschmelze zu verhindern und somit die fließende Polymergranulierung sicherzustellen, sowie eine entsprechende Schaumexpansion mit möglichst hohem Expansionspotential zu erreichen.

Der Durchmesser der Düsenöffnung für eine Einzelloch-Düse liegt vorzugsweise im Bereich von 0,8 bis 3 mm, bevorzugt 1,0 bis 2,4 mm. Für Multi-Loch-Düsen sind Düsendurchmesser von 0,4 bis 0,8 mm bevorzugt, besonders bevorzugt von 0,6 mm.

Das Granulieren erfolgt durch eine Lochplatte an einer Austrittsöffnung des Extruders, indem das Material extrudiert und dann abgelängt wird. Das Ablängen geschieht durch eine Schneidvorrichtung, welche üblicherweise dem Formwerkzeug, durch welches das Material extrudiert wird, unmittelbar nachgeschaltet ist.

Die Granulierung der Schmelze zum Abschluss des erfindungsgemäßen Verfahrens erfolgt durch Unterwassergranulation bei einem Druck im Wasserkreislauf, der bei dem erfindungsgemäßen Verfahren 0 bis 3,5 bar, bevorzugt 1 bis 2 bar beträgt, d.h. die Unter-Wasser-Granulierung wird ohne zusätzliche Druckbeaufschlagung des Wassers oder unter Druckbeaufschlagung von bis zu 3,5 bar vorgenommen. Mit dem Austritt der Schmelze aus der Düse erfährt das Polycarbonat-Material einen Druckabfall von 140 bis 180 bar, bevorzugt von 150 - 160 bar, jedoch nicht bis zur vollständigen Entlastung bei Atmosphärendruck, sondern auf den eingestellten Druck im Wasserkreislaufbis zu 3,5 bar. Das Material schäumt auf, jedoch nicht so weit, wie es aufgrund der vorhandenen Treibmittelmenge eigentlich zu erwarten wäre, sondern es wird stattdessen in einem entropischen nicht-Gleichgewichtszustand abgeschreckt, der die spätere Nachexpansion der Beads bedingt. Das physikalische Treibmittel, beispielsweise Kohlenstoffdioxid, bläht das Polycarbonat-Material auf, während das Gas aus der Polymerschmelze ausdiffundiert. Nach einer gewissen Zeit hat ein vollständiger oder nahezu vollständiger Gasaustausch stattgefunden, so dass in dem dann granulierten, expandierten Polycarbonat, den Polycarbonat-Beads, nur noch die normale Luftzusammensetzung zu finden ist. Die Polycarbonat-Beads sind damit "Treibmittel-frei".

Zur Durchführung der reaktiven Partikel-Schaumextrusion können folgende Aufbau-Anordnungen mit einer ausreichenden Verweilzeit zum Einsatz kommen, ohne darauf beschränkt zu sein:
a) Polymerisationsreaktor/ (statischer) Extruder/ Mischer/ Gasdosierung/ Schmelzepumpe/ Granulator
b) Extruder (Doppel/Einschnecke)/ Gasdosierung/ Granulator
c) Extruder (Doppel/Einschnecke)/ Gasdosierung/ Statische Mischer/ Granulator
d) Extruder (Doppel/Einschnecke)/ Gasdosierung/ Wärmetauscher/ Granulator
e) Extruder (Doppel/Einschnecke)/ Gasdosierung/ Statische Mischer/ Wärmetauscher/ Granulator
f) Doppelschneckenextruder/ Gasdosierung/ Einschneckenextruder/ Granulator
g) Doppelschneckenextruder/ Gasdosierung/ Einschneckenextruder/ Schmelzepumpe/ Granulator
h) Doppelschneckenextruder/ Gasdosierung/ Schmelzepumpe/ Wärmetauscher/ Schmelzepumpe/ Granulator.
i) Doppelschneckenextruder/ Gasdosierung/ Wärmetauscher/ Schmelzepumpe/ Granulator.

Der Extrusionsprozess kann ein- oder mehrstufig durchgeführt werden.

Im Detail kann der Prozess in verschiedenen Anordnungen realisiert werden. Wichtige Schritte des Prozesses sind: Aufschmelzen der auf aromatischem Polycarbonat basierenden Zusammensetzung, ggf. Zusatz von Nukleierungsmitteln (Talk, insbesondere Nano-Talkum, Graphit, Ruß, Pigmente und etc.), Zudosierung des Treibmittels über Flüssigdosierungen (z.B. der Firma Lewa GmbH aus Deutschland) oder Verdichtungsaggregate (Hochdruckaggregate) (z.B. der Firma Maximator GmbH aus Deutschland), ggf. Druckaufbau bis zur Lochplatte über z.B. Kühlung, geeignete Lochplattengeometrie, Zugabe von reaktiven Makromonomeren oder über technische Hilfsmittel wie Breaker-Plates oder Schmelzepumpen (bevorzugt wird der Druckaufbau durch Zugabe von reaktiven Makromonomeren oder über Nutzung von technischen Hilfsmittel erreicht), und zuletzt die Abschlagung des Granulats/Beads über eine Granulierung in flüssigem Medium, Heißabschlag oder eine Unter-Gas-Granulierung, wobei auch Gasmischungen eingesetzt werden können. Zu beachten ist, dass hierbei als flüssiges Medium nicht nur das Medium Wasser eingesetzt werden kann, sondern auch ein alternatives Medium wie Glycerin oder Glycerol.

Besonders bevorzugt wird zur Durchführung des erfindungsgemäßen Verfahrens ein Aufbau aus einer Doppelschnecke, einer Gasdosierung, einer Schmelzepumpe, einem Wärmetauscher, einer zweiten Schmelzepumpe und einer Unter-Wasser-Granulierung verwendet. Dabei wird weiter bevorzugt die Doppelschnecke zur Plastifizierung der auf aromatischem Polycarbonat basierenden Zusammensetzung und zur Einmischung des physikalischen Treibmittels sowie des Kettenverlängerers verwendet und der Wärmetauscher für die Verweilzeit und Aufbaureaktion.

Die Zudosierung des physikalischen Treibmittels zu der Schmelze, enthaltend das aromatische Polycarbonat und den währendes des Gesamtprozesses reagierenden Kettenverlängerer, erfolgt besonders bevorzugt im letzten Drittel der ersten Extrusionseinheit (je nach Aufbau). Die Durchmischung erfolgt dabei vorzugsweise so, dass die Polymerschmelze das Treibmittel schließlich in homogener Verteilung gelöst enthält, wobei der Anteil des physikalischen Treibmittels in der Mischung für CO₂ bevorzugt 1,0 bis 2,3 Gew.-%, weiter bevorzugt 1,2 bis 1,7 Gew.-%, besonders bevorzugt 1,3 - 1,5 Gew.-%, für N₂ bevorzugt 0,1 bis 0,5 Gew.-%, weiter bevorzugt 0,1 bis 0,3 Gew.-%, besonders bevorzugt 0,15 bis 0,25 Gew.-% und ganz besonders bevorzugt 0,15 bis 0,2 Gew.-%, bezogen auf das Gesamtgewicht an Polymerschmelze (= Polycarbonat-basierte Zusammensetzung) mit Kettenverlängerer, beträgt.

Bevorzugt werden zur Initiierung der Schaumzellbildung für eine feinere und homogenere Zellmorphologie Nukleierungsmittel wie Talk, insbesondere Nano-Talkum, Graphit, Ruß, Pigmente und etc. in geringen Konzentrationen von 0,1 bis 1,0 Gew.-%, weiter bevorzugt 0,15 bis 0,5 Gew.-%, besonders bevorzugt in Konzentrationen von 0,2 bis 0,3 Gew.-% zugesetzt, wobei sich die Mengenangaben auf die resultierende Gesamtzusammensetzung aus Polycarbonat-basierter Zusammensetzung und Kettenverlängerer beziehen.

Als physikalisches Treibmittel können grundsätzlich alle für die Schäumung von Thermoplasten gebräuchlichen Treibmittel verwendet werden. Beispiele sind hier Propan, Butan, n-Pentan, iso-Pentan, aber auch ähnliche aliphatische Kohlenwasserstoffe, auch aromatische Kohlenwasserstoffe, alizyklische Kohlenwasserstoffe, aliphatische Alkohole, Kohlenstoffdioxid, Stickstoff, Druckluft, Inertgase wie Argon oder Helium, und weitere. "Luft" unter Atmosphärendruck gilt nicht als Treibmittel im Sinne der vorliegenden Erfindung. "Druckluft" wird erfindungsgemäß verstanden als Luft, die einen höheren Druck als Atmosphärendruck aufweist. Es können auch Kombinationen aus zwei oder mehr dieser Treibmittel als physikalisches Treibmittel eingesetzt werden. Bevorzugt werden Kohlenstoffdioxid, ein oder mehrere Inertgase, Stickstoff, Luft oder deren Mischungen als physikalische Treibmittel eingesetzt, da diese nicht nur toxikologisch und ökologisch unbedenklich sind, sondern auch nicht brandfördernd wirken. Ganz besonders bevorzugt ist Stickstoff, Kohlenstoffdioxid oder ein Gemisch aus diesen, äußerst bevorzugt Kohlenstoffdioxid.

Sofern Stickstoff als physikalisches Treibmittel eingesetzt wird, werden bevorzugt 0,1 bis 0,5 Gew.-%, weiter bevorzugt 0,1 bis 0,3 Gew.-%, besonders bevorzugt 0,15 bis 0,25 Gew.-% und ganz besonders bevorzugt 0,15 bis 0,2 Gew.-% Stickstoff, bezogen auf die Polymerschmelze inklusive Kettenverlängerer und Additive (d.h. Polycarbonat-basierte Zusammensetzung plus Kettenverlängerer), eingesetzt.

Sofern Kohlenstoffdioxid als physikalisches Treibmittel eingesetzt wird, werden bevorzugt 1,0 bis 2,3 Gew.-%, weiter bevorzugt 1,2 bis 1,7 Gew.-%, besonders bevorzugt 1,3 - 1,5 Gew.-% Kohlenstoffdioxid, bezogen auf die Polymerschmelze inklusive Kettenverlängerer und Additive, eingesetzt.

Durch das erfindungsgemäße Verfahren lassen sich nachexpandierbare Polycarbonat-Beads erhalten, die aber gegenüber herkömmlichen nachexpandierbaren Beads treibmittelfrei sind. Unter einem "Bead" werden erfindungsgemäß geschäumte Granulatkörner (= Partikelschaum) verstanden, die üblicherweise eine Höchstdichte von maximal 50% des ungeschäumten Ausgangsmaterials (der auf aromatischem Polycarbonat basierenden Zusammensetzung) aufweisen. Die Anwendung von partikelverschäumtem Polycarbonat ermöglicht es, aufgrund des geringen Gewichts und der schlagzähen Eigenschaften des Materials, verbunden mit höheren Dauergebrauchstemperaturen (Beständigkeit bspw. im KTL-Lackierprozess) im Vergleich zu PP, ABS, PE oder PA6, das Gewicht einiger Fahrzeugkomponenten signifikant zu reduzieren sowie den Kraftstoffverbrauch und die CO₂-Emissionen zu senken, während die mechanischen Eigenschaften auch bei höherer Temperatur erhalten bleiben. Darüber hinaus ist zu erwarten, dass die Verfügbarkeit von verschäumtem Polycarbonat eine ganze Reihe weiterer Anwendungsbereiche zu erschließen vermag, vor allem überall dort, wo Isolationsaufgaben bei höheren Temperaturen gefragt sind.

Gegenstand der Erfindung sind außerdem nachexpandierbare Polycarbonat-Beads, hergestellt nach dem erfindungsgemäßen Verfahren. Gegenstand der Erfindung sind somit treibmittelfreie, geschäumte Polycarbonat-Beads mit einem gewichtsmittleren Molekulargewicht M_{w} des Polycarbonats, bestimmt mittels GPC-Messung in Dichlormethan, kalibriert gegen Bisphenol A-Polycarbonat-Standards, von 50.000 bis 160.000 g/mol, dadurch gekennzeichnet, dass die treibmittelfreien, geschäumten Polycarbonat-Beads nachexpandierbar sind und bei einer Verschweißung bei 4 bar in Wasserdampf-basierten Prozess ohne Vorbehandlung der Beads eine Nachexpansion von 20 bis 60 Vol.-% zeigen und wobei für die geschäumten Polycarbonat-Beads gilt: $Q = \frac{δ}{{M}_{w}} = 3 , 20 ⋅ {10}^{- 4} bis 1 , 93 ⋅ {10}^{- 3} \left(°⋅\frac{mol}{g}\right)$ mit
δ = dem Phasenwinkel im Van-Gurp-Palmen-Plot, bestimmt bei einem komplexen Schubmodul |G*| = 3000 Pa und einer Temperatur von 240°C, wobei δ < 78,0°, und M_{w} wie vorstehend beschrieben.

Gegenstand der Erfindung sind außerdem ein Verfahren zur Herstellung von Formteilen, insbesondere von solchen mit komplexer 3D-Geometrie, aus den erfindungsgemäßen Polycarbonat-Beads, sowie entsprechende Formteile.

Das in den erfindungsgemäßen, treibmittelfreien geschäumten Polycarbonat-Beads enthaltene aromatische Polycarbonat weist ein gewichtsmittleres Molekulargewicht, bestimmt mittels GPC in Dichlormethan, kalibriert gegen Bisphenol A-Polycarbonat-Standards von 50.000 bis 160.000 g/mol auf. Das aromatische Polycarbonat ist die Hauptkomponente des thermoplastischen Materials, aus dem die erfindungsgemäßen Polycarbonat-Beads, wie sie durch das erfindungsgemäße Verfahren erhalten werden, bestehen.

Das Ausgangsmaterial für die Herstellung der erfindungsgemäßen Beads in dem erfindungsgemäßen Verfahren ist aromatisches Polycarbonat, vorzugsweise in Form einer auf aromatischem Polycarbonat basierenden Zusammensetzung. "In Form einer auf aromatischem Polycarbonat basierenden Zusammensetzung" bedeutet erfindungsgemäß nicht, dass bereits eine fertig compoundierte Zusammensetzung dem Extruder, in dem die Partikelschaumextrusion durchgeführt wird, zuzuführen ist. Dieses kann so erfolgen, aber es können auch die verschiedenen Bestandteile der auf aromatischem Polycarbonat basierenden Zusammensetzung dem Extruder über einzelne Dosierelemente zugeführt werden. "Auf aromatischem Polycarbonat basierende Zusammensetzung" soll lediglich bedeuten, dass das Material, aus dem die Polycarbonat-Beads bestehen, eine beliebig ausgefeilte Zusammensetzung mit ggf. entsprechender Additivierung des Polycarbonats sein kann.

Unter "aromatischem Polycarbonat" im erfindungsgemäßen Sinne werden sowohl aromatische Homopolycarbonate als auch aromatische Copolycarbonate verstanden. Dabei können die Polycarbonate in bekannter Weise linear oder verzweigt sein.

Die Herstellung der Polycarbonate, die in den Zusammensetzungen enthalten sind, erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich. Erfindungsgemäß bevorzugt wird Polycarbonat eingesetzt, dass nach dem Schmelzepolymerisationsverfahren, auch "Umesterungsverfahren" genannt, hergestellt wurde. Erfindungsgemäß eingesetztes Polycarbonat weist 350 bis 600 ppm OH-Endgruppen auf, wobei sich diese Angabe auf das Polycarbonat als solches, auf das Polymer selbst, ohne ggf. zugesetzte Additive, bezieht. Die Menge der OH-Endgruppen bezieht sich auf das gesamt eingesetzte Polycarbonat. Es kann auch eine Mischung aus Polycarbonat, das mittels Schmelzepolymerisation erhalten wurde, und solchem, das mittels Grenzflächenverfahren erhalten wurde, eingesetzt werden, solange sich die Konzentration der OH-Endgruppen des eingesetzten Polycarbonats insgesamt im angegebenen Bereich bewegt. Besonders bevorzugt wird aber nur Polycarbonat, das mittels Schmelzepolymerisationsverfahren hergestellt wurde, eingesetzt.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylben-zol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 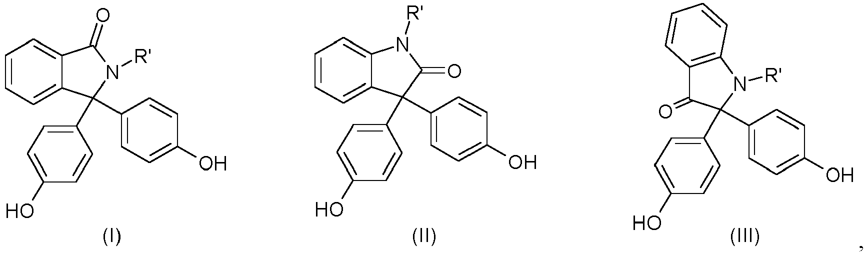 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (I), (II) und (III).

Diese und weitere geeignete Dihydroxyarylverbindungen sind z.B. in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Isooctylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydro-indol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, die Copolycarbonate auf Basis von 1,1-Bis-(4-hydroxyphenyl)-3,3,5-trimethylcyclohexan und 4,4'-Dihydroxydiphenyl sowie die Copolycarbonate auf Basis der beiden Monomere Bisphenol A und 1,1-Bis-(4-hydroxyphenyl)-3,3,5-trimethylcyclohexan, sowie von den Dihydroxyarylverbindungen der Formeln (I), (II) und (III) 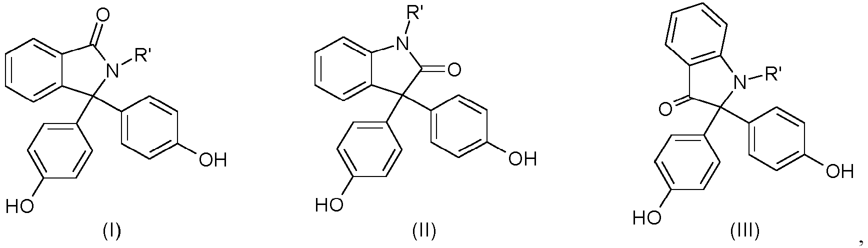 in denen R' jeweils für C₁ - bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A. Ganz besonders bevorzugt enthalten die auf Polycarbonat basierenden Zusammensetzungen Bisphenol A basiertes Polycarbonat, äußerst bevorzugt ist das Polycarbonat in den auf Polycarbonat basierenden Zusammensetzungen Bisphenol A-basiertes Homopolycarbonat.

Bevorzugt sind auch Copolycarbonate, zu deren Herstellung Diphenole der allgemeinen Formel (1a) eingesetzt wurden: 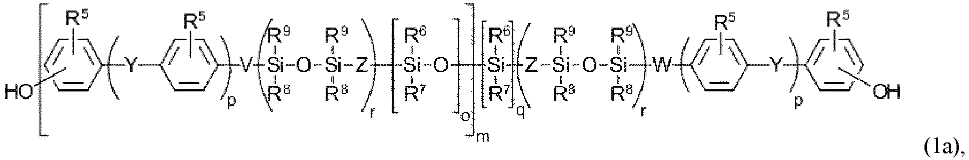 wobei
R⁵ für Wasserstoff oder C₁- bis C₄- Alkyl, C₁- bis C₃-Alkoxy, vorzugsweise für Wasserstoff; Methoxy oder Methyl, steht,
R⁶, R⁷, R⁸ und R⁹ jeweils unabhängig voneinander für C₁- bis C₄-Alkyl oder C₆- bis C₁₂-Aryl, vorzugsweise für Methyl oder Phenyl stehen,
Y für eine Einfachbindung, SO₂-, -S-, -CO-, -O-, C₁- bis C₆-Alkylen, C₂- bis C₅-Alkyliden, C₆- bis C₁₂-Arylen, welches gegebenenfalls mit weiteren Heteroatome enthaltenden aromatischen Ringen kondensiert sein kann oder für einen C₅- bis C₆-Cycloalkylidenrest, der ein- oder mehrfach mit C₁- bis C₄-Alkyl substituiert sein kann, bevorzugt für eine Einfachbindung, -O-, Isopropyliden oder für einen C₅- bis C₆-Cycloal-kylidenrest, der ein- oder mehrfach mit C₁- bis C₄-Alkyl substituiert sein kann, steht,
V für Sauerstoff, C₂- bis C₆-Alkylen oder C₃- bis C₆-Alkyliden, bevorzugt für Sauerstoff oder C₃-Alkylen,
p, q und r jeweils unabhängig für 0 oder 1 stehen,
wenn q = 0 ist, W für eine Einfachbindung steht, wenn q = 1 und r = 0 ist, W für Sauerstoff, C₂- bis C₆-Alkylen oder C₃- bis C₆-Alkyliden, bevorzugt für Sauerstoff oder C₃-Alkylen steht,
wenn q = 1 und r = 1 ist, W und V jeweils unabhängig für C₂- bis C₆-Alkylen oder C₃- bis C₆-Alkyliden, bevorzugt C₃-Alkylen steht,
Z für ein C₁- bis C₆-Alkylen, bevorzugt C₂-Alkylen steht,
o für eine durchschnittliche Anzahl von Wiederholungseinheiten von 10 bis 500, bevorzugt 10 bis 100 steht, und
m für eine durchschnittliche Anzahl von Wiederholungseinheiten von 1 bis 10, bevorzugt 1 bis 6, weiter bevorzugt 1,5 bis 5 steht. Ebenso ist es möglich, dass Diphenole verwendet werden, in denen zwei oder mehrere Siloxanblöcke der allgemeinen Formel (1a) über Terephthalsäure und/oder Isophthalsäure miteinander unter Ausbildung von Estergruppen verknüpft sind.

Insbesondere bevorzugt sind (Poly)Siloxane der Formeln (2) und (3) 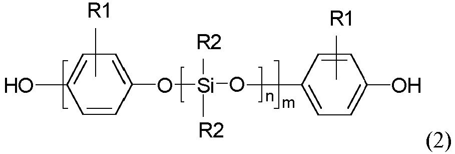 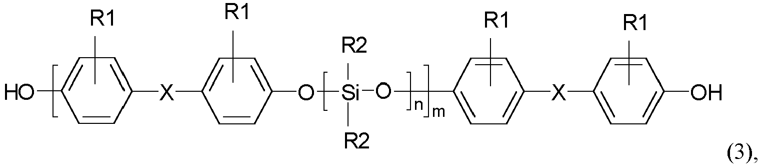
wobei R1 für Wasserstoff, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht,
X bevorzugt für eine Einfachbindung, C₁- bis C₅-Alkylen, C₂- bis C₅-Alkyliden, C₅- bis C₁₂-Cycloalkyliden, -O-, -SO- -CO-, -S-, -SO₂-, besonders bevorzugt steht X für eine Einfachbindung, Isopropyliden, C₅- bis C₁₂-Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 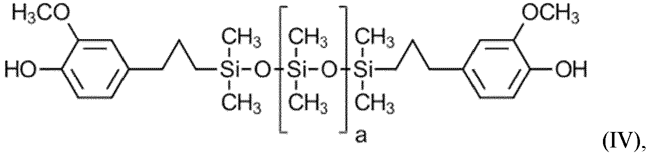 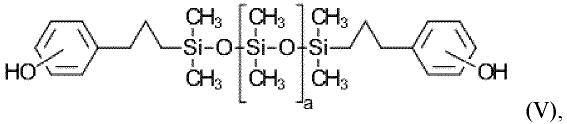 bevorzugt (Va) 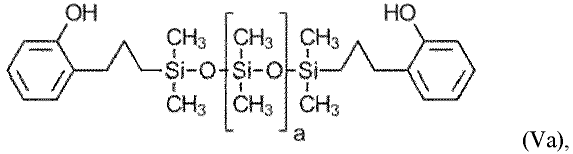 oder 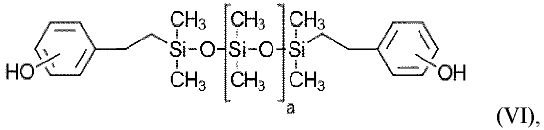 wobei a in Formel (IV), (V) und (VI) für eine durchschnittliche Zahl von 10 bis 400, bevorzugt 10 bis 100 und besonders bevorzugt für 15 bis 50 steht.

Dabei ist es ebenso bevorzugt, dass mindestens zwei gleiche oder verschiedene der Siloxanblöcke der allgemeinen Formeln (IV), (V) oder (VI) über Terephthalsäure und/oder Isophthalsäure miteinander unter Ausbildung von Estergruppen verknüpft sind.

Ebenso ist es bevorzugt, wenn in der Formel (1a) p = 0 ist, V für C₃-Alkylen steht, r = 1 ist, Z für C₂-Alkylen steht, R⁸ und R⁹ für Methyl stehen, q = 1 ist, W für C₃-Alkylen steht, m = 1 ist, R⁵ für Wasserstoff oder C₁- bis C₄-Alkyl, vorzugsweise für Wasserstoff oder Methyl, steht, R⁶ und R⁷ jeweils unabhängig voneinander für C₁- bis C₄-Alkyl, vorzugsweise für Methyl stehen und o für 10 bis 500 steht.

Copolycarbonate mit Monomereinheiten der Formel (1a) und insbesondere auch deren Herstellung sind in der WO 2015/052106 A2 beschrieben.

Copolycarbonate mit Monomereinheiten der Formel (IV) und insbesondere auch deren Herstellung sind in der WO 2015/052106 A2 beschrieben.

Dem aromatischen Polycarbonat können grundsätzlich ein oder mehrere Additiv(e) zugesetzt sein, und zwar bereits dem Polycarbonat, wie es als Ausgangsmaterial in dem erfindungsgemäßen Verfahren eingesetzt wird. Ein oder mehrere Additive können jedoch auch erst während der Durchführung des erfindungsgemäßen Verfahrens im Extruder dem aromatischen Polycarbonat zugeführt werden, und zwar bevorzugt zusammen mit dem Kettenverlängerer. Eine Einmischung über den Seitenextruder ist im erfindungsgemäßen Verfahren nicht möglich, sofern nur eine Extrusionsstufe verwendet wird, da das Treibmittel in der Schmelze vorliegt und dementsprechend über die Seitenbeschickung austreten würde. Eine gasdichte Seitenbeschickung würde aber das Einbringen der Additive auf diese Art ermöglichen. Additive können auch mittels Pulvervormischungen oder als Masterbatch eingebracht werden. Flüssige Additive können grundsätzlich an jeder Stelle des Verfahrens injiziert werden, solange noch eine ausreichende Homogenisierung erfolgen kann, bevorzugt im Bereich statischer oder dynamischer Mischaggregate. Additive können auch in einer ersten Stufe zugegeben werden und das Treibmittel dann in einer zweiten. Hier lassen sich die Additive dann auch über einen Seitenextruder zudosieren.

Die Mischung aus aromatischem Polycarbonat, ggf. Blendpartnern und ggf. Additiven als Startmaterial wird als "auf aromatischem Polycarbonat basierende Zusammensetzung" bezeichnet. In Verfahrensschritt a wird "nur" aromatisches Polycarbonat, oder aber aromatisches Polycarbonat als auf aromatischem Polycarbonat basierende Zusammensetzung eingesetzt. Sofern eine auf aromatischem Polycarbonat basierende Zusammensetzung eingesetzt wird, enthält diese bevorzugt mindestens 70 Gew.-%, weiter bevorzugt mindestens 80 Gew.-%, noch weiter bevorzugt mindestens 90 Gew.-%, besonders bevorzugt mindestens 95 Gew.-%, ganz besonders bevorzugt mindestens 98 Gew.-% aromatisches Polycarbonat, bezogen auf das Gesamtgewicht der Polycarbonat-Zusammensetzung. Äußerst bevorzugt enthält die "auf aromatischem Polycarbonat basierende Zusammensetzung" keine Blendpartner zu dem Polycarbonat, sondern in dem erfindungsgemäßen Verfahren zur Herstellung von Polycarbonat-Beads kommt, außer ggf. für Polycarbonat üblichen Additiven, nur aromatisches Polycarbonat zum Einsatz.

Solche weiteren Additive, wie sie üblicherweise Polycarbonaten zugesetzt werden, sind insbesondere Thermostabilisatoren, Flammschutzmittel, Antioxidantien, Entformungsmittel, Antitropfmittel, etwa Polytetrafluorethylen (Teflon) oder SAN-gekapseltes PTFE (z.B. Blendex 449), UV-Absorber, IR-Absorber, Schlagzähmodifikatoren, Antistatika, optische Aufheller, Füllstoffe wie Talk, Lichtstreumittel, Umesterungsinhibitoren, Verträglichkeitsvermittler, Nukleierungsmittel, Farbmittel, Pigmente, z.B. Titandioxid, Ruß, chemische Treibmittel und/oder Additive zur Lasermarkierung, insbesondere in den für Polycarbonat-basierte Zusammensetzungen üblichen Mengen. Derartige Additive sind beispielsweise in EP-A 0 839 623, WO-A 96/15102, EP-A 0 500 496 oder im "Plastics Additives Handbook", Hans Zweifel, 5th Edition 2000, Hanser Verlag, München beschrieben. Diese Additive können einzeln oder auch im Gemisch zugesetzt werden. Es versteht sich, dass nur solche Additive und nur in solchen Mengen zugesetzt werden dürfen, wenn sie sich nicht signifikant negativ auf die Herstellung der Beads nach dem erfindungsgemäßen Verfahren auswirken.

Bevorzugt sind die Additive ausgewählt aus der Gruppe der Thermostabilisatoren, Flammschutzmittel, Antioxidantien, Entformungsmittel, Farbmittel, Pigmente, Antitropfmittel, UV-Absorber, IR-Absorber, Nukleierungsmittel, Schlagzähmodifikatoren, Antistatika, optischen Aufheller, Lichtstreumittel, Umesterungsinhibitoren, Verträglichkeitsvermittler und/oder Additive zur Lasermarkierung.

Das aromatische Polycarbonat bzw. die auf aromatischem Polycarbonat basierende Zusammensetzung weist bevorzugt eine Schmelzevolumenfließrate MVR von bis zu 14 cm³/(10 min), weiter bevorzugt bis zu 12 cm³/(10 min), besonders bevorzugt von 5 cm³/(10 min) bis 9 cm³/(10 min), ganz besonders bevorzugt von 5,5 cm³/(10 min) bis 6,5 cm³/(10 min), bestimmt nach ISO 1133:2012-3 (Prüftemperatur 300°C, Masse 1,2 kg), auf.

Bei dem im erfindungsgemäßen Verfahren eingesetzten aromatischen Polycarbonat kann es sich um ein Polycarbonat, aber auch um eine Mischung aus zwei oder mehr aromatischen Polycarbonaten handeln, solange der Gehalt an OH-Endgruppen des gesamten eingesetzten Polycarbonats im erfindungsgemäßen Bereich liegt. Der OH-Endgruppengehalt ist bezogen auf das aromatische Polycarbonat zu verstehen, nicht auf die auf aromatischem Polycarbonat basierende Zusammensetzung. Es kann auch solches Polycarbonat eingesetzt werden, das ein Post Consumer oder Post Industrial Rezyklat ist. Entsprechende Rezyklate können als Granulat oder Mahlgut dem Extruder zugeführt werden. Es ist auch möglich, Rezyklat nur als einen Teil des aromatischen Polycarbonats einzusetzen.

Die erfindungsgemäßen geschäumten Polycarbonat-Beads sind treibmittelfreie Beads. Treibmittelfrei bedeutet, dass sich in den Schaumzellen zum Zeitpunkt der Weiterverarbeitung nach dem Gasaustausch nur Umgebungsluft befindet. Gleichwohl zeigen sie eine beachtliche Nachexpansion, etwa im Heißdampf-Diffusionsschweißprozess, da ihre Zellwände und Partikeloberflächen durch die Unterwasser-Granulierung durch Abschrecken im entropischen nicht-Gleichgewichtszustand eingefroren sind.

Die durch das erfindungsgemäße Verfahren hergestellten Polycarbonat-Beads weisen eine sphärische oder zumindest annähernd sphärische Form auf. "Annähernd sphärisch" bedeutet hierbei, dass, sofern die Kugel durch von einem gemeinsamen Ursprung ausgehende, in den Raum gerichtete Achsen gleicher Länge beschrieben wird, wobei die Achsen den Radius der Kugel in alle Raumrichtungen definieren, für die sphärischen Partikel eine Abweichung der Achsenlängen vom Idealzustand einer Kugel von bis zu 20% vorliegt.

Die erfindungsgemäßen nachexpandieren Polycarbonat-Beads weisen bevorzugt einen mittleren Partikeldurchmesser, bestimmt durch einen Camsizer nach ISO 13322-2 von 1,0 bis 3,2 mm, bevorzugt von 2 bis 2,6 mm auf, was sich durch Wahl einer geeigneten Lochplattengeometrie, also die Düsengröße - Lochdurchmesser und Bügellänge- am Extruder, aber auch durch den Durchsatz, die Messergeschwindigkeit und die Komposition der treibmittelhaltigen Schmelze einstellen lässt.

Die Polycarbonat-Beads weisen eine Offenzelligkeit von bis zu 20 %, bevorzugt bis zu 16 %, weiter bevorzugt bis 15 %, noch weiter bevorzugt bis zu 10%, bestimmt nach DIN EN ISO 4590:2016-12, auf. > 80 %, bevorzugt > 84 % der Zellen, weiter bevorzugt > 90 % der Zellen eines Beads sind intakt, d.h. bei diesen Beads wird die einzelne Zellstruktur von mindestens drei weiteren Strukturelementen (Zellen) geteilt und es liegen nicht mehr als zwei kaputte Zellwände pro einzelne Zelle vor. Die Polycarbonat-Beads weisen somit intakte ("geschlossenzellige") oder zumindest überwiegend intakte Zellen auf, weshalb sich aus den Polycarbonat-Beads Schaumstoff-Formteile mit sehr gleichmäßigen, ebenen Oberflächen und homogener Verschweißung der Beads herstellen lassen.

Die Partikeldichte der Beads vor der Nachexpansion, bestimmt nach dem Auftriebsprinzip nach ASTM-D-792:2020-07, beträgt 300 bis 620 kg/m³.

Der Phasenwinkel der Polycarbonat-Beads im Van Gurp-Palmen-Plot, bestimmt wie im Beispielteil beschrieben, beträgt bei einem komplexen Schubmodul |G*| = 3000 Pa und einer Temperatur von 240°C < 78,0°, bevorzugt 64° bis < 78,0 °, weiter bevorzugt 71° bis < 75°.

Für die nachexpandierbaren, treibmittelfreien, geschäumten Polycarbonat-Beads gilt, dass der Quotient aus diesem Phasenwinkel im Van-Gurp-Palmen-Plot und dem gewichtsmittleren Molekulargewicht des Polycarbonat 3,20 · 10⁻⁴ bis 1,93 · 10⁻³ (°·mol/g), bevorzugt 4,5 · 10⁻⁴ bis 1,52 · 10⁻³ (°·mol/g) beträgt.

Zur Herstellung von Formteilen/Bauteilen können Schaumpartikel miteinander variotherm (thermisch durch Heizen) oder bevorzugt in einem Wasserdampf-Formteilautomat verschweißt werden. Beim Wasserdampf-Formteilautomat wird die Partikeloberfläche angeschmolzen oder erweicht unter Verwendung von Hochdruck-Wasserdampf (d.h. Wasserdampf bei hoher Temperatur), was zu einer Interdiffusion von Polymerketten zwischen verschiedenen Perlen und resultierender Kohäsion der Perlen führt. Eine gute Kohäsion zwischen den Partikeln und ein geringer Anteil an Makroporen/Zwickel, d.h. Hohlräumen zwischen Partikeln im Bauteil aufgrund schlechter Packung sind notwendig, um günstige mechanische Eigenschaften zu gewährleisten. Die Verarbeitung von Schaumperlen zum Fertigteil erfolgt in einem Formteilautomaten in fünf Schritten: 1) Vollständiges oder teilweises Schließen der Form, 2) Füllen der Form mit ggf. anschließendem vollständigem Schließen, 3) Verschweißen der Partikel, 4) Kühlung und Stabilisierung, 5) Auswerfen des Formteils. Dabei werden zwei Verfahren unterschieden: Die Crackspaltmethode und die Druckfüllmethode. Bei der Druckfüllmethode wird das Werkzeug zunächst geschlossen, dann die Partikel durch Luftdruck aus einem Behälter gezogen und von einem Injektor mit ca. 3 bar in die Form geblasen und dort komprimiert. Die Partikel entspannen sich in der Form und füllen die Kavitäten besser aus (entspricht einer Überfüllung von ungefähr 10% bei der Crackspaltmethode). Bei der Crackspaltmethode wird das Werkzeug nicht vollständig geschlossen, sondern ein gewisser Spalt (%) bleibt noch offen. Dann erfolgt die Befüllung mit Partikeln, sodass das Werkzeug zu einem gewissen %-Satz überfüllt (10 - 20 Volumen-% bei EPC bis dato) wird. Danach wird das Werkzeug geschlossen und die Partikel werden auf Zieldicke komprimiert. Bei einer Zieldicke des Bauteils von beispielsweise 20 mm wird die Werkzeugkavität zum Befüllen z.B. 4 mm weiter geöffnet (= 20 Vol.-%), mit den Polycarbonat-Beads befüllt und anschließend wird das Werkzeug auf eine Bauteildicke von 20 mm zusammengefahren. Dieser Schritt ist entscheidend, um eine homogene Verteilung der Perlen in der Form zu erreichen. Im dritten Schritt werden die Perlen durch Heißdampf, der durch die Form nach einem festen Ablauf strömt, miteinander verschmolzen. Während der Bedampfung bilden die Perlen aufgrund der Interdiffusion von Polymerketten benachbarter Partikel physikalische Verbindungen. Um eine hohe Verschweißqualität zwischen den Partikeln zu gewährleisten, sind für EPC bis dato bevorzugt 7 bis 11 bar, besonders bevorzugt 8 bis 10 bar anzuwenden. Im Dampfbasierten Verschweißprozess, bei dem keine Überfüllung erfolgt, sondern wegen der Nachexpansion der Beads eine Unterfüllung erfolgen kann, wird zuerst die Luft zwischen den Perlen ausgespült und die Form vorgewärmt. Dabei strömt Dampf parallel zum Werkzeug bei geöffneten Ventilen ein. Im zweiten Schritt durchströmt der Dampf die Form, was als Querdämpfung bezeichnet wird. Während dieses Schrittes sind die einander gegenüberliegenden Dampf-Zu- und -austrittsventile geöffnet. Um eine möglichst homogene Temperaturverteilung und eine gleichmäßige Verschweißqualität im gesamten Teil zu gewährleisten, wird das Werkzeug vorzugsweise von beiden Seiten bedampft. Abschließend wird bei geschlossenen Auslassventilen Dampf bei bestimmten Druck in die Dampfkammer geleitet, um die Oberflächenqualität durch die Bildung einer Haut zu verbessern (Autoklavbedampfung). Im vierten Schritt wird das Formteil gekühlt, was entscheidend ist für die Maßhaltigkeit. Wird das Teil ohne Kühlung ausgeworfen, ist eine weitere Ausdehnung der Partikel möglich, was zu einer Abweichung vom Originalmaß führt. Zum Abkühlen wird die Form mit Wasser besprüht, bis eine Temperatur von ca. 80 °C erreicht ist. Nach dem Formen und Abkühlen wird das Teil schließlich im letzten Schritt ausgeworfen, bevorzugt durch Druckluft und mechanische Auswerfer.

Zur Herstellung von Formteilen aus den erfindungsgemäßen treibmittelfreien, geschäumten Polycarbonat-Beads kann vorteilhaft ein Standard-Heißdampf-Diffusionsschweißprozess genutzt werden. "Standard" bedeutet hierbei, dass es sich um ein etabliertes Verfahren in Maschinen handelt, die bereits zur Herstellung von Formteilen aus anderen Polymerschäumen mittels Heißdampf-Diffusionsschweißprozess verwendet werden. Vorzugsweise handelt es sich hierbei um eine Drop-in-Technologie für den EPP-Verschweißprozess, d.h. die nachexpandierbaren Polycarbonat-Beads können auf Anlagen zu Formteilen verarbeitet werden, die üblicherweise für die Herstellung von Formteilen aus expandiertem Polypropylen verwendet werden, wobei auch das vom EPP bekannte Verfahren genutzt werden kann. Die Polycarbonat-Beads können somit durch Befüllen entsprechender Kavitäten in Formteile, auch in solche mit komplexen Geometrien, überführt werden, wobei letztlich nur ein entsprechender Arbeitsschritt erforderlich ist. Das spätere, von Extrusionsschaumstoffen bekannte, häufig noch erforderliche Zuschneiden mit entsprechender Abfallbildung durch Verschnitt entfällt. Polycarbonat-Beads lassen sich zudem besser transportieren als die oftmals sperrigen Platten von verfügbaren Extrusionsschaumstoffen.

Bevorzugt ist somit die Herstellung von erfindungsgemäßen Formteilen aus erfindungsgemäßen nachexpandierbaren Polycarbonat-Beads mittels Heißdampf-Diffusionsschweißen bei einem mittleren Dampfdruck von 4 bis 6 bar, weiter bevorzugt bei 4,0 bis 4,5 bar, insbesondere bei 4 bar.

Aufgrund der sphärischen oder annähernd sphärischen Form der Beads lassen sich Formteile mit kompakter geschlossener Oberfläche erhalten.

Sofern die erfindungsgemäßen Polycarbonat-Beads nach ihrer Herstellung keine weitere Vorbehandlung erfahren, sondern eingesetzt werden, wie sie durch das erfindungsgemäße Verfahren erhalten wurden, zeigen die Polycarbonat-Beads im Heißdampf-Diffusionsschweißprozess bei 4 bar in Wasserdampf noch eine Nachexpansion von 20 bis 60 Vol.-%, bevorzugt von 30 bis 50 Vol.-%, obwohl sie bei Einsatz im Heißdampf-Diffusionsschweißprozess treibmittelfrei sind.

Die erfindungsgemäßen Formteile, d.h. Platten als auch solche mit komplexer 3D-Geometrie, weisen eine kompakte geschlossene Oberfläche auf und zeigen im Biegeversuch, bestimmt in Anlehnung an ISO 1209-2:2007, eine Biegedehnung am Kraftmaximum von mindestens 5,0 %, bevorzugt von mindestens 5,5 %, wobei "in Anlehnung an" an dieser Stelle bedeutet, dass die Probendicke 10 mm betrug, die Stützweite 100 mm und die Außenhaut der Proben entfernt wurde. Die verschweißte Platte lässt sich - unabhängig von der Kraft des Prüfers - nicht händisch brechen (Abmessung der Platte bei diesen Testungen: 300 x 200 x 15 mm³).

Die Bauteildichte entsprechender Formteile beträgt bevorzugt 200 bis 350 kg/m³, bestimmt nach DIN EN ISO 845:2009-10.

Entsprechende erfindungsgemäße Formteile können in der Automobilindustrie, im Transportwesen, in der Bauindustrie, der Luftfahrindustrie, der Raumfahrtindustrie, in der Verpackungsindustrie und generell im Leichtbau und/oder Verbundbau zur Anwendung kommen. Mögliche Formteile aus den Polycarbonat-Beads sind dabei nicht nur Platten, sondern auch komplexe, dreidimensional geformte Teile.

Formteile bestehend aus den bzw. umfassend die erfindungsgemäßen Polycarbonat-Beads sind insbesondere Sichtteile in verschiedenen Anwendungsfeldern, wobei auch eine Veredelung mit Lasertexturen möglich ist, etwa Armaturenbretter oder Innenraumverkleidungselemente, Schallschutzelemente, Einschäumungselemente, z.B. in Teppichen des Fußraumes beim Auto, ein Kernmaterial oder tragendes Schaumstoffteil von Verbundwerkstoffen, etwa für die Karosseriedämmung für Fahrzeuge, insbesondere E-Fahrzeuge, im Bereich HVAC (Heizung, Klima, Lüftung) als Isoliermaterial, als Hochtemperaturisolierung in Industrie, der Haus- und Gebäudetechnik oder im Transportwesen, Dämm-, Isoliermaterialien, Verpackungen, Leichtbauelemente, Rotorblätter von Windkraftanlagen, Fassadenbauteile.

### Beispiele

### 1. Beschreibung der Rohstoffe und Prüfmethoden

### a) Rohstoffe

**PC-1:** Aromatisches Polycarbonat auf Basis von Bisphenol A mit einer MVR von 6 cm³/(10 min) (300°C/1,2 kg, ISO 1133-1:2011) und einer Erweichungstemperatur (VST/B 120; ISO 306:2013) von 149°C. T_{g}, bestimmt nach DIN EN ISO 11357-1:2017: 148°C. M_{w}, bestimmt wie nachfolgend beschrieben, ca. 30.900 g/mol. Enthaltend 0,06% Thermostabilisator und 0,1% UV-Stabilisator. OH-Endgruppengehalt, bestimmt mittels ¹H-NMR-Spektroskopie mit Dichlormethan als Lösungsmittel bei Raumtemperatur: 470 ppm. Hergestellt über das Verfahren der Schmelzkondensation (SPC).

**PC-2:** Aromatisches Polycarbonat auf Basis von Bisphenol A mit einer MVR von 6 cm³/(10 min) (300°C/1,2 kg, ISO 1133-1:2011) und einer Erweichungstemperatur (VST/B 120; ISO 306:2013) von 150°C. T_{g}, bestimmt nach DIN EN ISO 11357-1:2017: 148°C. M_{w}, bestimmt wie nachfolgend beschrieben, ca. 30.900 g/mol bei 28 kDA (MALLS). OH-Endgruppengehalt, bestimmt mittels ¹H-NMR-Spektroskopie mit Dichlormethan als Lösungsmittel bei Raumtemperatur (wie vorstehend beschrieben): 60 ppm. Hergestellt über das Verfahren der Grenzflächenkondensation (LPC).

**CE-1:** Ein kommerziell erhältlicher und multifunktionaler Kettenverlängerer der BASF SE (Joncryl ADR 4468) auf Basis von Epoxy-Reaktivgruppen umfassendem Styrol-Acryl basiertem Polymer mit einem mittleren Molekulargewicht (Gelpermeationschromatographie in ortho-Dichlorbenzol bei 150°C mit Polystyrolkalibrierung) M_{w} = 7.250 g/mol, einem Epoxy-Äquivalentgewicht von 310 g/mol, bestimmt nach DIN EN 1877-1:2000-12, einer Glasübergangstemperatur T_{g} von 59 °C und einer Zersetzungstemperatur von 350°C, bestimmt nach DIN EN ISO 11357-1:2017.

### b) Prüfmethoden

Die **Biegedehnung** am Kraftmaximum wurde angelehnt an ISO 1209-2:2007 bestimmt, wobei "angelehnt" bedeutet, dass die Probendicke 10 mm betrug, die Stützweite 100 mm und die Außenhaut der Proben entfernt wurde.

Die **Molekulargewichtsbestimmung** erfolgte über GPC-Messung in Dichlormethan, kalibriert gegen Bisphenol A-Polycarbonat-Standards, nach DIN EN ISO 16014-3:2019.

Die **Dichtebestimmung** der Partikel erfolgte nach Auftriebsprinzip gemäß ASTM-D-792:2020-07, die Dichtebestimmung der Formteile nach DIN EN ISO 845:2009-10.

Van **Gurp-Palmen-Plot:** Werte der Phasenwinkel.

Die geschäumten Polycarbonat-Beads wurden in einem Ofen unter Vakuum für mindestens 20h bei 110°C getrocknet. Um eine homogene Trocknung sicherzustellen, wurde die Menge in dem Trocknungsbehälter so limitiert, dass nur der Boden des Behälters mit einer Schicht Beads bedeckt war. Die so getrockneten Proben wurden in einer P/O/Weber PW 20-Laborpresse bei 200°C in einen transparenten, 1,6 mm dicken Prüfkörper ohne sichtbare Gaseinschlüsse in einer Pressmaske mit einem Durchmesser von 25 mm verpresst. Anschließend wurde die Probe auf Raumtemperatur abgekühlt und umgehend in das auf 240°C vorgeheizte TA Instruments ARES G2 Rheometer überführt. Nach 2 Minuten Heizen wurde kurzzeitig eine geringe Normalkraft ausgeübt, um einen möglichst guten Kontakt zwischen dem Rheometer-Werkzeug und der geschmolzenen Probe sicherzustellen. Die Normalkraft wurde auf 0 reduziert, sobald der Messspalt auf 1,5 mm reduziert war. Das überstehende Material an der Kante, welches durch den Messstempel herausgedrückt worden war, wurde manuell entfernt. Nach 120s Temperierung wurde der 1,5 mm dicke Prüfkörper mit einen Durchmesser von 25 mm bei 240°C unter oszillatorischer Belastung mit einer Frequenz von 100 Hz bis zu 0,001 Herz bei einer Deformation von 0,4 % gemessen. Während des Probenhandlings und der Messung wurde der Konvektionsofen des Rheometers mit Stickstoffgas gespült, um eine Reaktion der Probe mit Sauerstoff zu verhindern. Nach der Messung bei 240°C wurde die Temperatur im Ofen auf 230°C gesenkt und die Messung wurde bei einer Dehnung von 0,3 % wiederholt. Anschließend wurde die Temperatur auf 220°C gesenkt und die Messung wurde bei einer Dehnung von 0,2 % wiederholt. Im nächsten Schritt wurde die Temperatur auf 210°C gesenkt und die Messung bei einer Dehnung von 0,12 % wiederholt. Anschließend wurde die Temperatur auf 205°C gesenkt und die Messung bei einer Dehnung von 0,1 % wiederholt. Danach wurde die Probe aus dem Rheometer entnommen. Eine visuelle Begutachtung der Probe ließ keine Blasen erkennen.

Die Ergebnisse der rheologischen Messungen bei verschiedenen Temperaturen, d.h. Speicher-Schermodul G', Verlust-Schermodul G" sowie Phasenwinkel δ (= arctan (G"/G')) wurden genutzt, um den sogenannten "Van Gurp-Palmen-Plot" zu erstellen, indem der gemessene Phasenwinkel δ gegen das komplexe Schubmodul $\left|G*\right| = \sqrt{{\left(G′\right)}^{2} + {\left(G"\right)}^{2}}$ aufgetragen wurde. Aus diesem Plot wurde der Phasenwinkel bei G* [MPa] = 3000 Pa bestimmt.

Die **Offenzelligkeit** wurde nach DIN EN ISO 4590:2016-12 bestimmt.

Der **Zelldurchmesser** wurde mittels REM (ASTM E1508-12a:2019) bestimmt.

Die **Größenverteilung** der Beads wurde über einen Camsizer bestimmt.

Zu den Beispielen wurden außerdem topologische Aufnahmen der hergestellten Formteile (s. Figuren) angefertigt. Das korrespondierende Höhenprofil wurde anhand von Fotoaufnahmen der Formteile mittels Image-Processing Software erstellt. Dazu wurde die Fotoaufnahme in ein 16-bit Graustufen Bild umgewandelt und ein repräsentativer Bereich von 2 cm x 2 cm ausgewählt. Von diesem Bereich wurde ein 3D-Oberflächen-Plot bei einer maximalen Grit-Größe von 1024 und einer Glättung von 200 (Draufsicht) erstellt sowie ein Oberflächenplot (Höhenprofilbild) als Wireframe mit einem Polygon Multiplier von 100%.

### c) Durchführung

### Versuche zur Identifizierung von geeignetem Material

Die nachfolgend beschriebenen Versuche wurden anhand des Aufbaus Doppelschneckenextruder-Gasdosierung-Einschneckenextruder-Schmelzepumpe-Unterwassergranulierung durchgeführt. Beispiel i) beschreibt eine Versuchsreihe mit sukzessiver Reduzierung der OH-Konzentration (ppm) der Polycarbonate bei konstanter Reaktivkomponente.
i) Eine Doppelschnecke (A-Extruder) der Firma Reifenhäuser (Troisdorf, Deutschland) mit 43 D wurde mit einem Durchsatz von 35 kg/h, bei Profiltemperaturen von 100 - 160 °C (Gehäuse 1 bis 3), 240 °C (Gehäuse 4) bis 280 °C (Gehäuse 5 - 10) und einer Drehzahl von 100 rpm gefahren. Zusätzlich wurde der Kettenverlängerer 1 in fester Konzentration von 0,7 Gew.-% zugesetzt. Bei dieser Reihe wurden durch einen unterschiedlichen Anteil eines zweiten Polycarbonats das molare Reaktivgruppenverhältnis OH : Epoxy variiert, und zwar zwischen 1 : 0,82 bis 1 : 1,47 (OH : Epoxy, jeweils in mol) (Tab. 1). Die Schmelzetemperatur war in der gesamtem Anlage (Aufschmelzzone der Doppelschnecke bis Lochplatte) 10 - 20 °C höher als die Gehäusetemperatur. Die Treibmittel-Zufuhr fand über einen Maximator (Maximator GmbH, Deutschland) und/oder über eine Dosierstation (Lewa GmbH, Deutschland) an der Position 6 mit einem Gehalt von 1,3 Gew.-% CO₂ statt. Die Druckprofile in der Doppelschnecke stiegen ab der Position 5 sukzessive von 45 bar bis zur Spitze des Extruders mit 270 bar für 100 Gew.-% SPC an. Durch Zugabe einer OH-Endgruppen armen PC-Komponente, PC-2, sind die Druckprofile zunächst geringfügig auf 275 bar bei einem Gehalt von 10% gestiegen. Eine weitere Zugabe OH-Endgruppen-armen PC-Komponente über 20 Gew.-% hinaus führte zu abfallenden Druckprofilen. Die Schmelze wurde über das Übergaberohr (290 °C) in die Einschnecke (B-Extruder) (Reifenhäuser) gefördert. Der B-Extruder wurde ebenfalls bei einer durchgehenden Gehäusetemperatur von 280 °C, einem Durchsatz von 35 kg/h und mit einer Drehzahl von 26 rpm betrieben. Die Schmelzepumpe wurde druckgeregelt bei einem Staudruck von 110 bar und einer Temperatur von 280 °C gefahren. Der Druck nach der Schmelzepumpe wurde durch den Gehalt des reaktiven Polycarbonats bestimmt und wurde durch den Fremdmatrixanteil reduziert (detailliert in Tab. 1 dargestellt). Die Anfahrweiche und die Lochplatte waren ebenfalls auf eine Temperatur von 280 °C eingestellt und die Schmelzetemperatur an der Anfahrweiche und Lochplatte lag bei T_{g} + 140 °C bis T_{g} + 150 °C. Die UWG (EUP 50) sowie die Lochplatte wurden von der Firma ECON (Econ GmbH, Österreich) hergestellt. Die Lochplatte bestand aus 5 Einzellocheinsätzen mit einem Durchmesser von 2,2 mm und einer Bügellänge 3,49 mm. Die Verweilzeit der Schmelze zwischen Einzug und Austritt belief sich auf ca. 7-10 Minuten. Nach dem Austritt wurde die Schmelze mit einem rotierenden 6-fach Messer mit 1500 rpm abgetrennt und von 70 - 80 °C kaltem Wasserkreislauf (28 m³/h) abtransportiert. Die Rundheit der Partikel nahm sukzessive ab und die Schaumdichte zu.

Bei einer zu geringen Konzentration des Polycarbonats an OH-Endgruppen, und zwar < 350 ppm, bricht der Herstellungsprozess mit einem molaren Reaktivgruppenverhältnis (OH : Epoxy, jeweils in mol) von 1 : 1,12 (außerhalb des Anspruchsbereiches) zusammen. Der Molekulargewichtsaufbau findet dabei nicht mehr im ausreichendem Maße statt, sodass die Viskositäten des Schmelzegemisches und damit die Drücke an der Lochplatte nicht mehr für einen homogenen Partikelschaum ausreichen. Die erhaltenen Partikel weisen dabei eine länglichere Form und eine Inhomogenität in Form und Aussehen auf (bedingt durch niedrigere Viskosität und damit veränderte Fließeigenschaften) bei höheren Schaumdichten (niedrigerer Druckabfall) (Tab. 2). Die Partikel lassen sich nicht mehr hinreichend gut im Druckbereich von 7 - 11 bar verschweißen. Die Bauteile haben keine geschlossene Oberfläche und viele Einfallstellen/Hohlräume, was in schlechterer Wärmeleitfähigkeit, erhöhter Steifigkeit, deutlich reduzierter maximaler Biegedehnung und schlechterer Durchstoß-Performance resultiert (Tab. 2 und Tab. 3).

Die hergestellten Partikel wurden durch einen Formteilautomat Teubert TVZ162/100PP (Teubert Maschinenbau GmbH, Deutschland) zu Bauteilen der Dichte 200 ± 10 kg/m³ und einer Geometrie von 300 × 200 × 15 mm³ verarbeitet. Der notwendige Druck für die Verschweißung lag für das EPC aus der Konzentrationsstudie für die Identifizierung des geeigneten Materials im Bereich von 7 bis 10 bar. Abschließend wurden die Eigenschaften der Bauteile bestimmt. Dabei wurden Rasterelektronen-Mikroskopie-Messungen (REM, Model: JEOL JSM-6510, Borken, Deutschland) mit Graphit-besputterten Proben zur Darstellung der Morphologie durchgeführt. Eine dynamisch-mechanische Analyse (DMA) wurde an einer Gabo Eplexor 500N der Firma NETZSCH GmbH, (Selb, Deutschland) im Druckmodus an 15 × 15 × 15 mm³ Proben im Temperaturbereich von -25 bis 250 °C bei einer Heizrate von 1 K/min im druckreguliertem Modus mit einer Amplitude von 5% (statisch) und 2% (dynamisch) der Probenhöhe mit einer Frequenz von 1 Hz durchgeführt. Die mechanische Charakterisierung wurde anhand von Druck-, Zug- und 3-Punktbiegung (Raumtemperatur, 80 und 110 °C) und Durchstoß-Versuchen (RT) durchgeführt. Druckversuche wurden nach der DIN EN ISO 844:2014-11 an einer Universalprüfmaschine Zwick Z020 der Firma Zwick & Roell (Ulm, Germany) an Proben mit einer Geometrie von 15 × 15 × 15 mm³ und bei einer 10 kN Kraftmessdose bis zu 60 % Kompression durchgeführt. Eine 3-Punktbiegung wurde basierend auf der ISO 1209-1:2007-05 mit gleicher Universalprüfmaschine bei 10 mm/min und einer Kraftmessdose von 20 kN durchgeführt. Die Proben wurden gehäutet, um den Einfluss der kompakten Randschicht auszublenden und die Geometrie auf 120 × 25 × 10 mm³ angepasst. Zugmessungen an den Bauteilen wurden nach der ISO 1926:2009 an einer Universalprüfmaschine Zwick Z050, (Zwick & Roell, Ulm, Deutschland) mit einer Probengeometrie von 140 (30+80+30) × 80 × 15 mm³ und einer 20 kN Kraftmessdose vorgenommen. Die Durchstoßcharakterisierung erfolgte mit einer Fallbolzen-Prüfmaschine Fractovis Plus der Firma Instron Ceast (Pianezza, Italien) mit einer Maximalenergie von 40 J und einer Durchstoßgeschwindigkeit von 4,4 m/s (angelehnt an die DIN EN ISO 6603-2:2002-04) mit einer Probengeometrie von 60 × 60 × 15 mm³. Alle mechanischen Charakterisierungen wurden bei Raumtemperatur, 80 °C und 110 °C durchgeführt, jeweils mit einem 10 min Zwischenschritt für Temperaturanpassung vor der Messung. Alle Bauteile wurden bei gleicher Dichte um die 200 kg/m³ untersucht. Wärmeleitfähigkeitsmessungen wurden an einem HFM 446 Lambda Messgerät der Firma NETZSCH (Selb, Deutschland) bei -10 °C, 10 °C, 25 °C, 50 °C und 70 °C durchgeführt.

Die **OH-Zahl** der Polymere wurde mittels ¹H-NMR-Spektroskopie mit Dichlormethan als Lösungsmittel bei Raumtemperatur unter Auswertung des Verhältnisses der Integrale der Signale bei 6,68 ppm (2 aromatische Protonen ortho-ständig zu phenolischen-OH Gruppen) und bei 1,68 ppm (6 Methylprotonen der Bisphenol-A Einheit) ermittelt.

**Tab. 1: Detaillierte Zusammensetzungen und analytische Ergebnisse zu der Studie des molaren Verhältnisses nach Beispiel i)**

| | **E*-1** | **E*-2** | **E*-3** | **V-4** | **V-5** | **V-6** |
|---|---|---|---|---|---|---|
| **PC1 [Gew.-%]** | 99,3 | 89,3 | 79,3 | 69,3 | 59,3 | 49,3 |
| **PC2 [Gew.-%]** | 0 | 10 | 20 | 30 | 40 | 50 |
| **Durchsatz PC1 [g/h]** | 34760 | 31280 | 27810 | 24330 | 20806 | 17380 |
| **Druck Ende A-Extruder [bar]** | 270 | 275 | 250 | 288 | 189 | 176 |
| **Druck direkt vor Lochplatte [bar]** | 190 | 184 | 177 | 170 | 134 | 122 |
| **OH-Gruppengehalt, bezogen auf das Gesamtgewicht des aromatischen Polycarbonats [ppm]** | 470 | 429 | 387 | 346 | 305 | 264 |
| **Molares Verhältnis der reaktiven OH-Gruppe (PC) zur reaktiven Gruppe des Kettenverlängerers (1: x)** | 0,82 | 0,90 | 1,00 | 1,12 | 1,27 | 1,47 |
| **M_{w} aus GPC [g/mol]** | 50180 | 52870 | 95690 | 93175 | 71691 | 50210 |
| **M_{w} aus GPC-MALLS [kDA]** | 158 | 168 | 206 | 207 | 139 | 107 |
| **Partikeldichte [kg/m³]** | 197 | 234 | 265 | 271 | 260 | 253 |
| **Mittlerer Zelldurchmesser [µm]** | 100 ± 47 | 129 ± 77 | 139 ± 66 | 193 ± 99 | 193 ± 117 | 206 ± 134 |
| **Zelldichte [Zellen/cm³]** | 8,88·10⁵ | 4,12·10⁵ | 3,48·10⁵ | 1,47·10⁵ | 1,33·10⁵ | 1,18·10⁵ |
| **Zellkoaleszenz** | Nein | Nein | Nein | Ja | Ja | Ja |

**Tab. 2: Detaillierte Kennwerte der Druckprüfungen, Biegeprüfungen und Durchstoß-Versuche für die Vergleichsstudie im Beispiel i) der EPC-Partikelschaumbauteile**

| | **EPC (E*-1)** | **EPC (V-4)** |
|---|---|---|
| **Bauteildichte [kg/m³]** | 200 ± 10 | 230 ± 15 |
| **Druckmodul [MPa]** | 54,7 ± 5 | 50,9 ± 5,2 |
| **Druckfestigkeit bei 10 % Kompression [MPa]** | 1,61 ± 0,12 | 1,90 ± 0,14 |

| | **EPC (E*-1)** | **EPC (V-4)** |
|---|---|---|
| **Biegemodul [MPa]** | 59,1 ± 11,4 | 86 ± 6,4 |
| **Biegefestigkeit [MPa]** | 2,2 ± 0,3 | 2,52 ± 0,30 |
| **Maximale Biegedehnung [%]** | 8,8 ± 1,1 | 5,1 ± 0,7 |

| | **EPC (E*-1)** | **EPC (V-4)** |
|---|---|---|
| **Maximale Kraft [N]** | 1688 ± 27 | 936 ± 107 |
| **Durchstoßkraft [N]** | 844 ± 29 | 467 ± 53 |
| **Gesamtenergie [J]** | 21,2 ± 3 | 12,2 ± 2 |
| **Gesamtdeformation [mm]** | 33,9 | 28,4 ± 7 |

| | | |
|---|---|---|
| *Notiz: Bauteil aus EPC (V-4) hat eine Schaumdichte von 230 kg*/*m³. Die Kennwerte sind hier original und müssten mit einen Faktor 0,85 für einfache %-uelle Normierung verrechnet werden.* | | |

Durch diese Versuche wurde festgestellt, dass als Ausgangsmaterial für weitere Versuche solches aromatische Polycarbonat dienen soll, das, bezogen auf das Gesamtgewicht des aromatischen Polycarbonats, einen Gehalt an OH-Endgruppen von mindestens 350 ppm, bestimmt mittels ¹H-NMR-Spektroskopie mit Dichlormethan als Lösungsmittel bei Raumtemperatur, aufweist und dass so viel Kettenverlängerer verwendet werden sollte, dass auf 1 mol OH-Endgruppen des Polycarbonats 0,64-1,10 mol der reaktiven Gruppe des Kettenverlängerers eingesetzt werden.

### Erfindungsgemäßes Beispiel 1

*Anlagensetup*: Ein Doppelschneckenextruder vom Typ ZSK 26 MC (Firma Coperion GmbH) mit 44 D und eine Gasdosierstation (Firma Promix Solutions GmbH), ein Wärmetauscher, gefolgt von einer Schmelzepumpe (Firma Maag-Germany GmbH) und einer Unter-Wasser-Granulierung vom Typ LPU (Firma Maag-Germany GmbH) mit Lochplattengeometrie: 2 Löcher mit 2,4 mm Lochdurchmesser und 12,7 mm Bügellänge und mit einer Messergeschwindigkeit 4500 upm (7-fach Messer).

*Rezeptur:* 99,3 Gew.-% aromatisches Polycarbonat PC-1, 0,7 Gew.-% multifunktionaler Kettenverlängerer CE-1, 1,3 Gew.-% CO₂. Molares Verhältnis der reaktiven Gruppen OH-Endgruppen des Polycarbonats : Epoxy ist 1 mol : 0,82 mol.

*Prozess:* Der Durchsatz war 20 kg/h bei einer eingestellten Temperatur im Extruder und im Wärmetauscher von 285 °C. Die Extruderdrehzahl war 230 upm. Der Massedruck im Extruder betrug 64 bar. Die Schmelzetemperatur vor der Anfahrweiche betrug 290 °C. Die Temperatur der Lochplatte war 330 °C bei einem Massedruck von 177 bar. Die Prozesswassertemperatur betrug 92 °C bei einem Wasserdruck von 2,5 bar. Die Verweilzeit in der Anlage betrug 400 s.

*Ergebnis:* Es wurden Partikel mit einem mittleren Durchmesser von 2,4 - 2,6 mm, einer Partikeldichte nach Auftriebsprinzip von 505 kg/m³, einem mittleren Zelldurchmesser von 82 µm, einer Offenzelligkeit von 6%, einem Phasenwinkel im Van-Gurp-Palmen-Plot von 72° und einem Quotienten Q von 4,65 · 10⁻⁴ (° · mol/g) erhalten. Die Partikel waren **bei 4 bar** in einem "Standard" Heißdampf-Diffusionsschweißprozess verschweißbar und führten bei einer Nachexpansion von 47 Vol.-% (100 %-(100 * Dichte nach Verschweißung/Dichte vor Verschweißung) zu einem Formteil mit einer Bauteildichte von 270 kg/m³. Das Formteil hat eine kompakte geschlossene Oberfläche (**Fehler! Verweisquelle konnte nicht gefunden werden.**), ließ sich händisch nicht brechen und zeigte im Biegeversuch eine Biegedehnung am Kraftmaximum von 6,4%.

### Erfindungsgemäßes Beispiel 2

Änderungen gegenüber dem erfindungsgemäßen Beispiel 1:
*Anlagensetup:* Eine zusätzliche Schmelzepumpe (Firma Maag-Germany GmbH) vor dem Wärmetauscher. Die Lochplattengeometrie war 3 Löcher mit 1,8 mm Lochdurchmesser und 11 mm Bügellänge und die Messergeschwindigkeit betrug 4700 upm.
*Prozess:* Die Temperatur der Lochplatte war 330 °C bei einem Massedruck von 162 bar. Die Prozesswassertemperatur betrug 91 °C bei einem Wasserdruck von 2 bar. Die Verweilzeit in der Anlage betrug 420 s.
*Ergebnis:* Es wurden Partikel mit einem mittleren Durchmesser von 2,0 - 2,2 mm, einer Partikeldichte von 614 kg/m³, einem mittleren Zelldurchmesser von 54 µm, einer Offenzelligkeit von 4%, einem Phasenwinkel im Van-Gurp-Palmen-Plot von 72° und einem Quotienten Q von 8,0 · 10⁻⁴(° · mol/g) erhalten. Die Partikel waren bei 4 bar in einem "Standard" Heißdampf-Diffusionsschweißprozess verschweißbar und führten bei einer Nachexpansion von 46 Vol.-% zu einem Formteil mit einer Bauteildichte von 330 kg/m³. Das Formteil hatte eine kompakte geschlossene Oberfläche (**Fehler! Verweisquelle konnte nicht gefunden werden.**), ließ sich händisch nicht brechen und zeigte im Biegeversuch eine Biegedehnung am Kraftmaximum von 5,8 %.

### Erfindungsgemäßes Beispiel 3

Änderungen gegenüber dem erfindungsgemäßen Beispiel 1:
*Anlagensetup:* Eine zusätzliche Schmelzepumpe (Firma Maag-Germany GmbH) vor dem Wärmetauscher. Die Messergeschwindigkeit war 4700 upm.
*Prozess:* Die Extruderdrehzahl war 150 upm. Die Schmelzetemperatur vor der Anfahrweiche betrug 285 °C. Die Temperatur der Lochplatte war 335 °C bei einem Massedruck von 189 bar. Die Prozesswassertemperatur betrug 85 °C bei einem Wasserdruck von 1,5 bar. Die Verweilzeit in der Anlage betrug 460 s.
*Ergebnis:* Es wurden Partikel mit einem mittleren Durchmesser von 2,4 - 2,6 mm, einer Partikeldichte von 485 kg/m³, einem mittleren Zelldurchmesser von 43 µm, einer Offenzelligkeit von 4%, einem Phasenwinkel von 71° und einem Quotienten Q von 9,47 · 10⁻⁴ (° · mol/g) erhalten. Die Partikel waren bei 4 bar in einem "Standard" Heißdampf-Diffusionsschweißprozess verschweißbar und führten bei einer Nachexpansion von 36 Vol.-% zu einem Formteil mit einer Bauteildichte von 310 kg/m³. Das Formteil hatte eine kompakte geschlossene Oberfläche (**Fehler! Verweisquelle konnte nicht gefunden werden.**), ließ sich händisch nicht brechen und zeigte im Biegeversuch (angelehnt an ISO 1209-2:2007) eine Biegedehnung am Kraftmaximum von 6,6%.

### Erfindungsgemäßes Beispiel 4

Änderungen gegenüber dem erfindungsgemäßen Beispiel 1:
*Anlagensetup:* Eine zusätzliche Schmelzepumpe (Firma Maag-Germany GmbH) vor dem Wärmetauscher. Die Messergeschwindigkeit war 4700 upm.
*Prozess:* Der Durchsatz war 24 kg/h. Die Schmelzetemperatur vor der Anfahrweiche betrug 284 °C. Die Temperatur der Lochplatte war 335 °C bei einem Massedruck von 177 bar. Die Prozesswassertemperatur betrug 85 °C bei einem Wasserdruck von 1,8 bar. Die Verweilzeit in der Anlage betrug 350 s.
*Ergebnis:* Es wurden Partikel mit einem mittleren Durchmesser von 2,6 - 3,2 mm, einer Partikeldichte von 425 kg/m³, einem mittleren Zelldurchmesser von 43 µm, einer Offenzelligkeit von 15%, einem Phasenwinkel von 74° und einem Quotienten Q von 1,52 · 10⁻³ (° · mol/g) erhalten. Die Partikel waren bei 4 bar in einem "Standard Heißdampf-Diffusionsschweißprozess verschweißbar und führten bei einer Nachexpansion von 31 Vol.-% zu einem Formteil mit einer Bauteildichte von 290 kg/m³. Das Formteil hatte eine kompakte geschlossene Oberfläche (**Fehler! Verweisquelle konnte nicht gefunden werden.**), ließ sich händisch nicht brechen und zeigte im Biegeversuch eine Biegedehnung am Kraftmaximum von 6,0%.

### Vergleichsbeispiel 1

Änderungen gegenüber dem erfindungsgemäßen Beispiel 1:
*Anlagensetup:* Kein Wärmetauscher im Prozess.
*Prozess:* Die Temperatur der Lochplatte war 330 °C bei einem Massedruck von 137 bar. Die Prozesswassertemperatur betrug 85 °C bei einem Wasserdruck von 3,5 bar. Die Verweilzeit in der Anlage war mit 90 s sehr kurz.
*Ergebnis:* Es wurden Partikel mit einem mittleren Durchmesser von 2,6 - 2,8 mm, einer Partikeldichte von 490 kg/m³, einem mittleren Zelldurchmesser von 41 µm, einer Offenzelligkeit von 45%, einem Phasenwinkel von 79° und einem Quotienten Q außerhalb des Anspruchsbereiches von 1,95 · 10⁻³ (° · mol/g) erhalten. Die Partikel waren bei 4 bar in einem "Standard" Heißdampf-Diffusionsschweißprozess schlecht verschweißbar trotz einer Nachexpansion von 34 Vol.-%. Das Verhältnis von Molekulargewicht und Kettenverzweigungen lag außerhalb des optimalen Bereiches. Eine unzureichende Molmasse und nicht ausreichend Kettenverzweigungen bedeuten eine niedrige Schmelzefestigkeit und damit unzureichende Stabilisierung der Morphologie, was zu einer hohen Offenzelligkeit und schlechten Verschweißung führt. Nach diesem Beispiel resultierende Formteile bestanden aus teilweise lose zusammengepressten Partikeln mit einer Bauteildichte von 320 kg/m³. Sie hatten keine kompakte geschlossene Oberfläche (**Fehler! Verweisquelle konnte nicht gefunden werden.**), ließen sich händisch brechen und zeigt im Biegeversuch eine Biegedehnung am Kraftmaximum von 2,1%.

### Vergleichsbeispiel 2

Änderungen gegenüber dem erfindungsgemäßen Beispiel 1:
*Anlagensetup*: Eine zusätzliche Schmelzepumpe (Firma Maag-Germany GmbH) vor dem Wärmetauscher. Die Lochplattengeometrie war 2 Löcher mit einem Lochdurchmesser von 2,8 mm und einer Bügellänge von 6 mm.
*Rezeptur:* 99,5 Gew.-% aromatisches Polycarbonat PC-1, 0,5 Gew.-% multifunktionaler Kettenverlängerer CE-1, 1,3 Gew.-% CO₂. Molares Verhältnis der reaktiven Gruppen OH-Endgruppen des Polycarbonats : Epoxy ist 1 mol : 0,59 mol.
*Prozess:* Der Durchsatz betrug 24 kg/h. Die Temperatur der Lochplatte war 330 °C bei einem Massedruck von 130 bar. Die Prozesswassertemperatur betrug 91 °C bei einem Wasserdruck von 2 bar. Die Verweilzeit in der Anlage betrug 430 s.
*Ergebnis:* Es wurden Partikel mit einem mittleren Durchmesser von 2,4 - 2,6 mm, einer Partikeldichte von 370 kg/m³, einem mittleren Zelldurchmesser von 81 µm, einer Offenzelligkeit von 40%, einem Phasenwinkel von 84° und einem Quotienten außerhalb des Anspruchsbereiches Q von 2,71 · 10⁻³ (° · mol/g) erhalten.

Die Partikel waren bei 4 bar in einem "Standard" Heißdampf-Diffusionsschweißprozess nicht verschweißbar, zeigten keine Nachexpansion und kollabierten im Werkzeug, bedingt durch ein unzureichendes molekulares Verhältnis der Reaktivgruppen für eine chemische Aufbaureaktion bei einer Verweilzeit von 430 s. Die resultierenden Formteile bestanden aus lose zusammengepressten Partikeln, hatten keine kompakte geschlossene Oberfläche **(Fehler! Verweisquelle konnte nicht gefunden werden.)** und brachen durch das Eigengewicht (geringste mögliche Belastung). Für den Biegeversuch wurde für dieses Material eine Biegedehnung am Kraftmaximum von 0% angegeben.

Nachfolgend findet sich eine Übersicht (Tabelle 3) über die erhaltenen Versuchsergebnisse.

**Tab. 3: Übersicht über die Formteilqualität bzw. die Bead-Eigenschaften der erfindungsgemäßen Beispiele und der Vergleichsbeispiele**

| | Eigenschaften der Beads | | | | | | | Eigenschaften Formteil | | | |
|---|---|---|---|---|---|---|---|---|---|---|---|
| | Mittlerer Partikeldurchmesser [mm] | Partikeldichte [kg/m³] | Offenzelligkeit [%] | M_{w} [g/mol] | δ [°] | Quotient Q = δ/M_{w} [°·mol/g] | Nachexpansion [%] | Verschweißbarkeit im Standardprozess | Oberfläche | Bauteildichte [kg/m³] | Biegedehnung am Kraftmax. [%] |
| Erfindungsgemäßes Beispiel 1 | 2,4-2,6 | 505 | 6 | 155.000 | 72 | 4,65 · 10⁻⁴ | 47 | ja | geschlossen, Fig. 1a, 1b | 270 | 6,4 |
| Erfindungsgemäßes Beispiel 2 | 2,0-2,2 | 614 | 4 | 90.000 | 72 | 8,0 · 10⁻⁴ | 46 | ja | geschlossen, Fig. 2a, 2b | 330 | 5,8 |
| Erfindungsgemäßes Beispiel 3 | 2,4-2,6 | 485 | 4 | 75.000 | 71 | 9,47 · 10⁻⁴ | 36 | ja | geschlossen, Fig. 3a, 3b | 310 | 6,6 |
| Erfindungsgemäßes Beispiel 4 | 2,6-3,2 | 425 | 15 | 50.000 | 74 | 1,52 · 10⁻³ | 31 | ja | geschlossen, Fig. 4a, 4b | 290 | 6,0 |
| Vergleichsbeispiel 1 | 2,6-2,8 | 490 | 45 | 40.500 | 79 | 1,93 · 10⁻³ | 34 | nein | nicht geschlossen, Fig. 5a, 5b | 320 | 2,1 |
| Vergleichsbeispiel 2 | 2,4-2,6 | 370 | 40 | 31.000 | 84 | 2,71 · 10⁻³ | keine | nein | nicht geschlossen Fig. 6a, 6b | 370 | 0 |

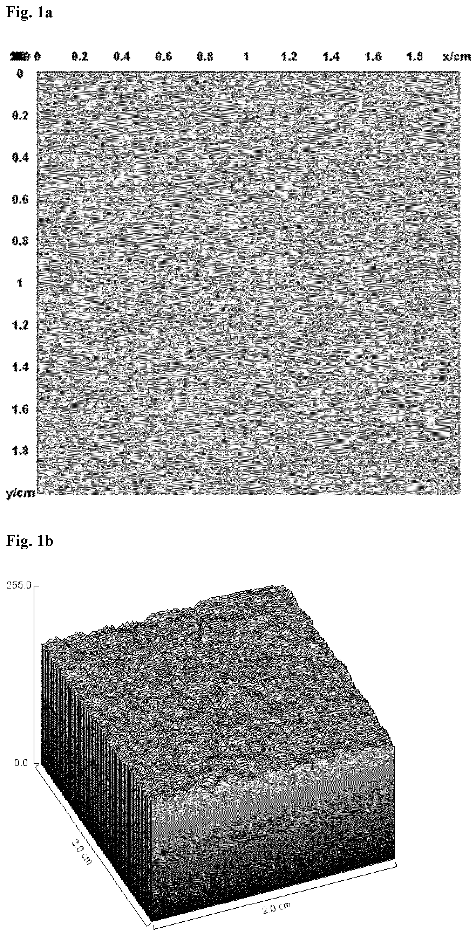

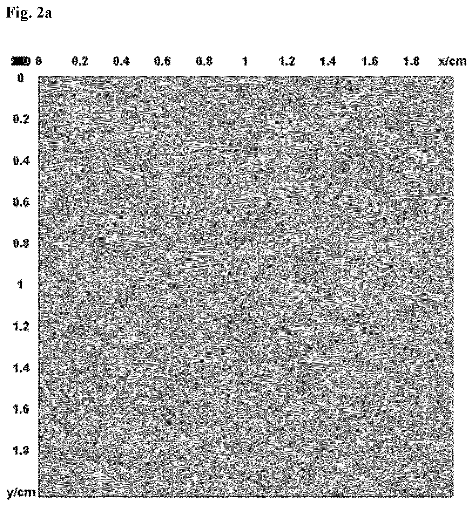

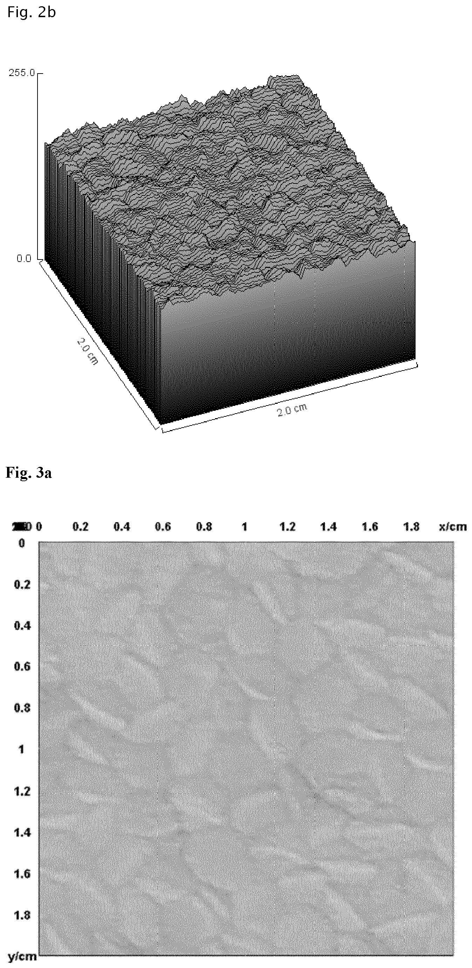

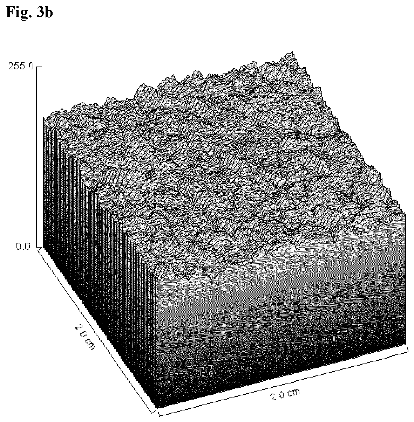

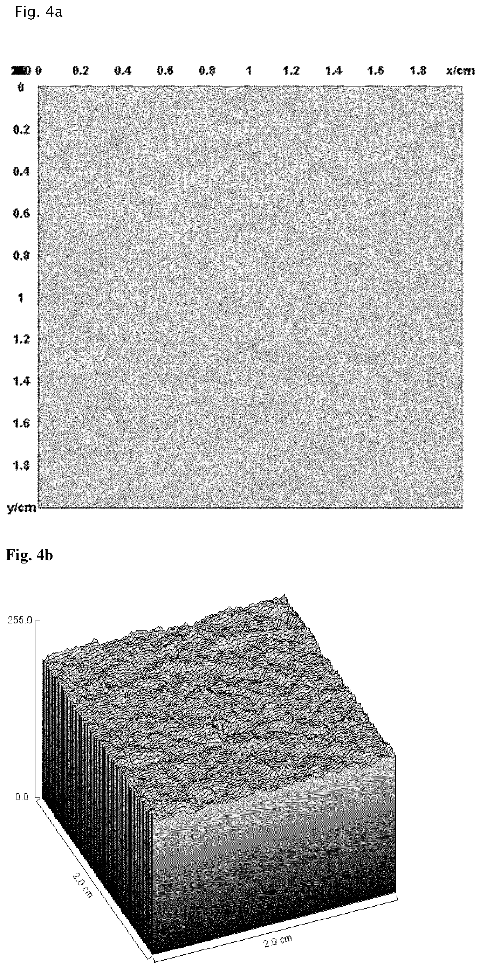

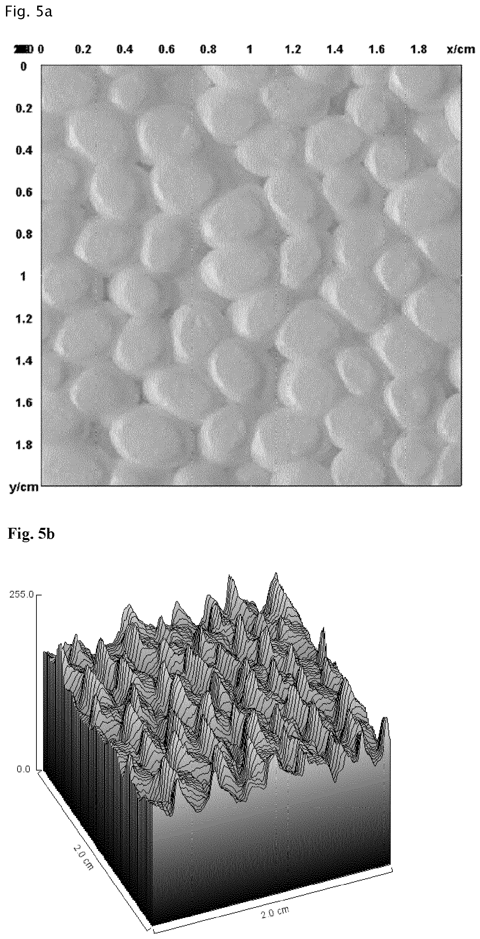

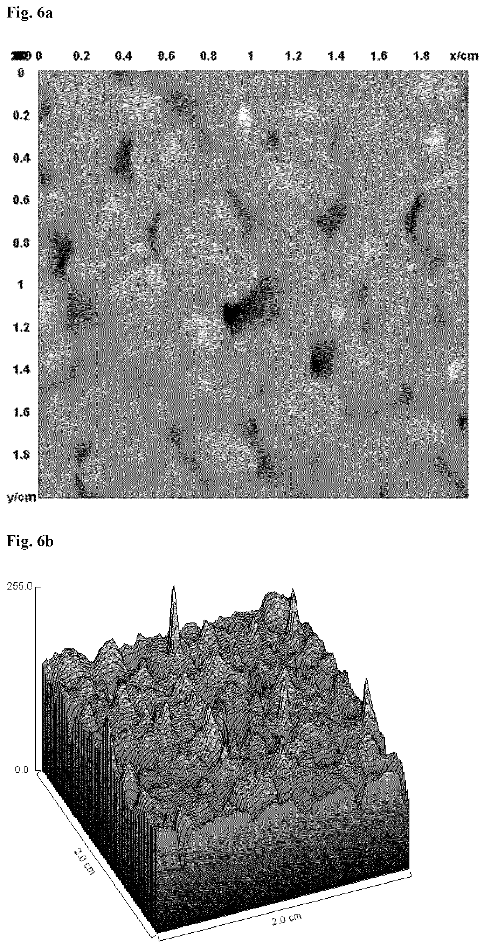

## Patentansprüche

1. Verfahren zur Herstellung von nachexpandierbaren geschäumten Polycarbonat-Beads mittels
a) kontinuierlicher Partikelschaumextrusion einer plastifizierten Mischung in einem Extrusionsprozess,
wobei die Mischung die folgenden Komponenten enthält:
i) aromatisches Polycarbonat, wobei das aromatische Polycarbonat, bezogen auf das Gesamtgewicht des aromatischen Polycarbonats, einen Gehalt an OH-Endgruppen von mindestens 350 ppm, bestimmt mittels ¹H-NMR-Spektroskopie mit Dichlormethan als Lösungsmittel bei Raumtemperatur, aufweist,
und
ii) einen für OH-Gruppen geeigneten Kettenverlängerer,
wobei das aromatische Polycarbonat und der für OH-Gruppen geeignete Kettenverlängerer in einem solchen molaren Verhältnis eingesetzt sind, dass auf 1 mol OH-Endgruppen des Polycarbonats 0,64-1,10 mol der reaktiven Gruppe des Kettenverlängerers eingesetzt werden,
sowie
iii) ein physikalisches Treibmittel,
bei einer Temperatur T der plastifizierten Mischung von T₁ = (T_{g} + 110°C) bis T₂ = (T_{g} + 170°C),
wobei T_{g} die Glasübergangstemperatur des aromatischen Polycarbonats ist,
wobei die Verweilzeit des aromatischen Polycarbonats und des für OH-Gruppen geeigneten Kettenverlängerers im Schmelzezustand mindestens 4 Minuten beträgt, und
b) nachfolgender Unter-Wasser-Granulierung der Treibmittel-haltigen Schmelze bei Wassertemperaturen T₃ = (T_{g} - 90°C) bis T₄ = (T_{g} - 55°C), wobei T_{g} die Glasübergangstemperatur des aromatischen Polycarbonats ist,
wobei die Glasübergangstemperatur nach DIN EN ISO 11357-1:2017 mittels Dynamischer Differenzkalorimetrie bestimmt wird,
ohne Druckbeaufschlagung oder unter Druckbeaufschlagung des Wassers bis 3,5 bar.

2. Verfahren nach Anspruch 1, wobei die Verweilzeit der Mischung im Schmelzezustand mindestens 5,5 min beträgt.

3. Verfahren nach Anspruch 1 oder 2, wobei auf 1 mol OH-Endgruppen des Polycarbonats 0,8-1,0 mol der reaktiven Gruppe des Kettenverlängerers eingesetzt werden.

4. Verfahren nach einem der vorhergehenden Ansprüche, wobei die Unter-Wasser-Granulierung der Treibmittel-haltigen Schmelze unter Druckbeaufschlagung des Wassers mit 1,5 bis 2,5 bar erfolgt.

5. Verfahren nach einem der vorhergehenden Ansprüche, wobei die mittleren Partikeldurchmesser der nachexpandierbaren geschäumten Polycarbonat-Beads auf 1,0 bis 3,2 mm, bevorzugt von 2 bis 2,6 mm eingestellt werden.

6. Verfahren nach einem der vorhergehenden Ansprüche, wobei die durch Schritt b erhaltenen Beads vor einer Weiterverarbeitung so lange gelagert werden, bis ein vollständiger Gasaustausch stattgefunden hat.

7. Treibmittelfreie, geschäumte Polycarbonat-Beads hergestellt nach dem Verfahren aus Anspruch 6 mit einem gewichtsmittleren Molekulargewicht M_{w} des Polycarbonats, bestimmt mittels GPC- Messung in Dichlormethan, kalibriert gegen Bisphenol A-Polycarbonat-Standards, von 50.000 bis 160.000 g/mol, **dadurch gekennzeichnet,**
**dass** die geschäumten Polycarbonat-Beads nachexpandierbar sind und bei einer Verschweißung bei 4 bar in Wasserdampf ohne Vorbehandlung der Beads eine Nachexpansion von 20 bis 60 Vol.-% zeigen und
wobei für die geschäumten Polycarbonat-Beads gilt: $Q = \frac{δ}{{M}_{w}} = 3 , 20 ⋅ {10}^{- 4} bis 1 , 93 ⋅ {10}^{- 3} \left(°⋅\frac{mol}{g}\right)$
Mit δ = dem Phasenwinkel im Van-Gurp-Palmen-Plot, bestimmt bei einem komplexen Schubmodul |G*| = 3000 Pa und einer Temperatur von 240°C, wobei δ < 78,0°,
und
M_{w} wie vorstehend beschrieben.

8. Treibmittelfreie, geschäumte Polycarbonat-Beads nach Anspruch 7, wobei die Polycarbonat-Beads sphärisch sind oder annähernd sphärisch sind, wobei "annähernd sphärisch" hierbei bedeutet, dass, sofern die Kugel durch von einem gemeinsamen Ursprung ausgehende, in den Raum gerichtete Achsen gleicher Länge beschrieben wird, wobei die Achsen den Radius der Kugel in alle Raumrichtungen definieren, für die sphärischen Partikel eine Abweichung der Achsenlängen vom Idealzustand einer Kugel von bis zu 20% vorliegt.

9. Treibmittelfreie, geschäumte Polycarbonat-Beads nach Anspruch 7 oder 8, wobei der Phasenwinkel δ im Van-Gurp-Palmen-Plot, bestimmt bei einem komplexen Schubmodul |G*| = 3000 Pa und einer Temperatur von 240°C, 64 bis < 78,0° beträgt.

10. Geschäumte Polycarbonat-Beads nach einem der Ansprüche 7 bis 9, wobei der Phasenwinkel δ im Van-Gurp-Palmen-Plot, bestimmt bei einem komplexen Schubmodul |G*| = 3000 Pa und einer Temperatur von 240°C, < 75° beträgt.

11. Geschäumte Polycarbonat-Beads nach einem der Ansprüche 7 bis 10, wobei die geschäumten Polycarbonat-Beads eine Offenzelligkeit von bis zu 20 %, bestimmt nach DIN EN ISO 4590:2016-12, aufweisen.

12. Geschäumte Polycarbonat-Beads nach einem der Ansprüche 7 bis 11, wobei die Polycarbonat-Beads eine Offenzelligkeit von bis zu 15 %, bestimmt nach DIN EN ISO 4590:2016-12, aufweisen.

13. Geschäumte Polycarbonat-Beads nach einem der Ansprüche 7 bis 12, wobei die Polycarbonat-Beads eine Nachexpansion von 30 bis 50 % bei einer Verschweißung bei 4 bar in Wasserdampf ohne Vorbehandlung der Beads zeigen.

14. Formteile, hergestellt aus den treibmittelfreien, geschäumten Polycarbonat-Beads nach einem der Ansprüche 7 bis 13.

15. Verfahren zur Herstellung von Formteilen nach Anspruch 14, wobei die Formteilherstellung mittels Wasserheißdampf bei mittleren absoluten Dampfdrücken von 4 bis 6 bar erfolgt.

## Claims

1. Process for producing postexpandable foamed polycarbonate beads by means of
a) continuous particle foam extrusion of a plastified mixture in an extrusion process,
where the mixture contains the following components:
i) aromatic polycarbonate, where the aromatic polycarbonate, based on the total weight of the aromatic polycarbonate, has a content of OH end groups of at least 350 ppm, determined by ¹H NMR spectroscopy with dichloromethane as solvent at room temperature,
and
ii) a chain extender suitable for OH groups,
wherein the aromatic polycarbonate and the chain extender suitable for OH groups are used in such a molar ratio that 0.64-1.10 mol of the reactive group of the chain extender is used per 1 mol of OH end groups of the polycarbonate,
and
iii) a physical blowing agent,
at a temperature T of the plastified mixture of T₁ = (T_{g} + 110°C) to T₂ = (T_{g} + 170°C), where T_{g} is the glass transition temperature of the aromatic polycarbonate,
wherein the dwell time of the aromatic polycarbonate and of the chain extender suitable for OH groups in the molten state is at least 4 minutes, and
b) subsequent underwater pelletization of the blowing agent-containing melt at water temperatures T₃ = (T_{g} - 90°C) to T₄ = (T_{g} - 55°C), where T_{g} is the glass transition temperature of the aromatic polycarbonate,
wherein the glass transition temperature is determined in accordance with DIN EN ISO 11357-1:2017 by means of dynamic differential calorimetry,
without pressurization or under pressurization of the water up to 3.5 bar.

2. Process according to Claim 1, wherein the dwell time of the mixture in the molten state is at least 5.5 min.

3. Process according to Claim 1 or 2, wherein 0.8-1.0 mol of the reactive group of the chain extender is used per 1 mol of OH end groups of the polycarbonate.

4. Process according to any of the preceding claims, wherein the underwater pelletization of the blowing agent-containing melt is effected under pressurization of the water at 1.5 to 2.5 bar.

5. Process according to any of the preceding claims, wherein the average particle diameters of the postexpandable foamed polycarbonate beads are adjusted to 1.0 to 3.2 mm, preferably from 2 to 2.6 mm.

6. Process according to any of the preceding claims, wherein the beads obtained by step b are stored prior to further processing until a complete gas exchange has taken place.

7. Blowing agent-free, foamed polycarbonate beads produced according to the process from Claim 6
having a weight-average molecular weight M_{w} of the polycarbonate, determined by GPC measurement in dichloromethane, calibrated against bisphenol A polycarbonate standards, of 50 000 to 160 000 g/mol,
**characterized in that**
the foamed polycarbonate beads are postexpandable and show postexpansion of 20% to 60% by volume on welding at 4 bar in water vapour without pretreatment of the beads and
where the foamed polycarbonate beads are subject to the following condition: $Q = \frac{δ}{{M}_{w}} = 3.20 ⋅ {10}^{- 4} bis 1.93 ⋅ {10}^{- 3} \left(°⋅\frac{mol}{g}\right)$
with δ = the phase angle in the Van Gurp-Palmen plot, determined at a complex shear modulus |G*| = 3000 Pa and a temperature of 240°C, where δ < 78.0°,
and
M_{w} as described above.

8. Blowing agent-free, foamed polycarbonate beads according to Claim 7, wherein the polycarbonate beads are spherical or approximately spherical, "approximately spherical" meaning that, if the sphere is described by axes of equal length directed into space from a common origin, the axes defining the radius of the sphere in all spatial directions, there is a variance of the axis lengths from the ideal state of a sphere of up to 20% for the spherical particles.

9. Blowing agent-free, foamed polycarbonate beads according to Claim 7 or 8, wherein the phase angle δ in the Van Gurp-Palmen plot, determined at a complex shear modulus |G*| = 3000 Pa and a temperature of 240°C, is 64° to < 78.0°.

10. Foamed polycarbonate beads according to any of Claims 7 to 9, wherein the phase angle δ in the Van Gurp-Palmen plot, determined at a complex shear modulus |G*| = 3000 Pa and a temperature of 240°C, is < 75°.

11. Foamed polycarbonate beads according to any of Claims 7 to 10, wherein the foamed polycarbonate beads have an open-cell content of up to 20%, determined in accordance with DIN EN ISO 4590:2016-12.

12. Foamed polycarbonate beads according to any of Claims 7 to 11, wherein the polycarbonate beads have an open-cell content of up to 15%, determined in accordance with DIN EN ISO 4590:2016-12.

13. Foamed polycarbonate beads according to any of Claims 7 to 12, wherein the polycarbonate beads show postexpansion of 30 to 50% on welding at 4 bar in water vapour without pretreatment of the beads.

14. Moulded articles produced from the blowing agent-free foamed polycarbonate beads according to any of Claims 7 to 13.

15. Process for producing moulded articles according to Claim 14, wherein the moulded articles are produced by means of steam at average absolute steam pressures of 4 to 6 bar.

## Revendications

1. Procédé de fabrication de billes de polycarbonate expansées post-expansibles par
a) l'extrusion continue de mousse particulaire d'un mélange plastifié dans un processus d'extrusion,
le mélange contenant les composants suivants :
i) du polycarbonate aromatique, le polycarbonate aromatique présentant, par rapport au poids total du polycarbonate aromatique, une teneur en groupes terminaux OH d'au moins 350 ppm, déterminée par spectroscopie RMN ¹H avec du dichlorométhane comme solvant à température ambiante,
et
ii) un agent d'allongement de chaîne adapté aux groupes OH,
le polycarbonate aromatique et l'agent d'allongement de chaîne adapté aux groupes OH étant utilisés dans un rapport molaire tel que 0,64 à 1,10 mole du groupe réactif de l'agent d'allongement de chaîne soit utilisée pour 1 mole de groupes terminaux OH du polycarbonate,
ainsi que
iii) un agent gonflant physique,
à une température T du mélange plastifié de T₁ = (T_{g} + 110 °C) à T₂ = (T_{g} + 170 °C), T_{g} étant la température de transition vitreuse du polycarbonate aromatique,
le temps de séjour du polycarbonate aromatique et de l'agent d'allongement de chaîne approprié pour les groupes OH à l'état fondu étant d'au moins 4 minutes, et
b) la granulation sous l'eau consécutive de la masse fondue contenant l'agent gonflant à des températures de l'eau T₃ = (T_{g} - 90 °C) à T₄ = (T_{g} - 55 °C), T_{g} étant la température de transition vitreuse du polycarbonate aromatique,
la température de transition vitreuse étant déterminée selon la norme DIN EN ISO 11357-1:2017 par calorimétrie différentielle dynamique,
sans mise sous pression ou avec mise sous pression de l'eau jusqu'à 3,5 bars.

2. Procédé selon la revendication 1, le temps de séjour du mélange à l'état fondu étant d'au moins 5,5 minutes.

3. Procédé selon la revendication 1 ou 2, 0,8 à 1,0 mole du groupe réactif de l'agent d'allongement de chaîne étant utilisée pour 1 mole de groupes terminaux OH du polycarbonate.

4. Procédé selon l'une quelconque des revendications précédentes, la granulation sous l'eau de la masse fondue contenant l'agent gonflant s'effectuant avec une mise sous pression de l'eau de 1,5 à 2,5 bars.

5. Procédé selon l'une quelconque des revendications précédentes, les diamètres de particule moyens des billes de polycarbonate expansées post-expansibles étant ajustés de 1,0 à 3,2 mm, de préférence de 2 à 2,6 mm.

6. Procédé selon l'une quelconque des revendications précédentes, dans lequel les billes obtenues à l'étape b sont stockées avant un traitement ultérieur jusqu'à ce qu'un échange gazeux complet ait eu lieu.

7. Billes de polycarbonate expansées sans agent gonflant, fabriquées par le procédé selon la revendication 6, ayant une masse molaire moyenne en poids M_{w} du polycarbonate, déterminée par mesure GPC dans du dichlorométhane, calibré par rapport à des étalons de bisphénol A-polycarbonate, de 50 000 à 160 000 g/mol, **caractérisées en ce que**
les billes de polycarbonate expansées sont post-expansibles et présentent, lors d'un soudage à 4 bars dans de la vapeur d'eau sans prétraitement des billes, une post-expansion de 20 à 60 % en volume, et
où, pour les billes de polycarbonate expansées, on a : $Q = \frac{δ}{{M}_{w}} = 3 , 20 ⋅ {10}^{- 4} à 1 , 93 ⋅ {10}^{- 3} \left(°⋅\frac{mol}{g}\right)$
avec δ = l'angle de phase dans le diagramme de Van Gurp-Palmen, déterminé à un module de cisaillement complexe |G*| = 3000 Pa et une température de 240 °C, où δ < 78,0°, et
M_{w} telle que décrite précédemment.

8. Billes de polycarbonate expansées sans agent gonflant selon la revendication 7, les billes de polycarbonate étant sphériques ou approximativement sphériques, « approximativement sphériques » signifiant ici que, dans la mesure où la sphère est décrite par des axes de même longueur partant d'une origine commune et dirigés dans l'espace, les axes définissant le rayon de la sphère dans toutes les directions de l'espace, les particules sphériques présentent un écart des longueurs d'axe par rapport à l'état idéal d'une sphère de jusqu'à 20 %.

9. Billes de polycarbonate expansées sans agent gonflant selon la revendication 7 ou 8, l'angle de phase δ dans le diagramme de Van Gurp-Palmen, déterminé pour un module de cisaillement complexe |G*| = 3000 Pa et une température de 240 °C, étant de 64 à < 78,0°.

10. Billes de polycarbonate expansées selon l'une quelconque des revendications 7 à 9, l'angle de phase δ dans le diagramme de Van Gurp-Palmen, déterminé pour un module de cisaillement complexe |G*| = 3000 Pa et une température de 240 °C, étant < 75°.

11. Billes de polycarbonate expansées selon l'une quelconque des revendications 7 à 10, les billes de polycarbonate expansées présentant un taux de cellules ouvertes de jusqu'à 20 %, déterminé selon la norme DIN EN ISO 4590:2016-12.

12. Billes de polycarbonate expansées selon l'une quelconque des revendications 7 à 11, les billes de polycarbonate présentant un taux de cellules ouvertes de jusqu'à 15 %, déterminé selon la norme DIN EN ISO 4590:2016-12.

13. Billes de polycarbonate expansées selon l'une quelconque des revendications 7 à 12, les billes de polycarbonate présentant une post-expansion de 30 à 50 % lors d'un soudage à 4 bars dans de la vapeur d'eau sans prétraitement des billes.

14. Pièces moulées, fabriquées à partir de billes de polycarbonate expansées sans agent gonflant selon l'une quelconque des revendications 7 à 13.

15. Procédé de fabrication de pièces moulées selon la revendication 14, la fabrication des pièces moulées s'effectuant au moyen de vapeur d'eau surchauffée à des pressions de vapeur absolues moyennes de 4 à 6 bars.
